(19) Europäisches Patentamt
European Patent Office
Office européen des brevets

(11) Veröffentlichungsnummer: **0 289 788 B1**

(12) **EUROPÄISCHE PATENTSCHRIFT**

(45) Veröffentlichungstag der Patentschrift: **07.07.93**

(21) Anmeldenummer: **88105377.1**

(22) Anmeldetag: **02.04.88**

(51) Int. Cl.$^5$: **C08F 220/04**, C08F 222/02, A01C 1/06, A01N 25/26, //(C08F220/04,222:02,220:28, 246:00),(C08F222/02,220:04, 220:28,246:00)

(54) **Wasserlösliche Copolymerisate, Verfahren zu ihrer Herstellung und ihre Verwendung.**

(30) Priorität: **11.04.87 DE 3712317**
**04.03.88 DE 3807086**

(43) Veröffentlichungstag der Anmeldung:
**09.11.88 Patentblatt 88/45**

(45) Bekanntmachung des Hinweises auf die Patenterteilung:
**07.07.93 Patentblatt 93/27**

(84) Benannte Vertragsstaaten:
**AT BE CH DE ES FR GB IT LI NL SE**

(56) Entgegenhaltungen:
**DE-A- 3 233 776**
**DE-A- 3 302 496**
**FR-A- 2 595 706**
**US-A- 4 555 557**
**US-A- 4 710 537**

(73) Patentinhaber: **BASF Aktiengesellschaft**
**Carl-Bosch-Strasse 38**
**W-6700 Ludwigshafen(DE)**

(72) Erfinder: **Seelmann, Eggebert, Hans-Peter, Dr.**
**Friedrichstrasse 8**
**W-6905 Schriesheim(DE)**
Erfinder: **Boeckh, Dieter, Dr.**
**Trifelsring 63**
**W-6703 Limburgerhof(DE)**
Erfinder: **Hartmann, Heinrich, Dr.**
**Weinheimer Strasse 46**
**W-6703 Limburgerhof(DE)**
Erfinder: **Trieselt, Wolfgang, Dr.**
**Alwin-Mittasch-Platz 1**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Aus der WO-Anmeldung 85/01736 ist bekannt, Saatgut mit einer Polymerisatmischung zu beschichten, die hygroskopisch ist. Die Mischung besteht aus feinteiligen vernetzten Polyacrylamiden und feinteiligen vernetzten Polyacrylaten. Diese Mischungen können gegebenenfalls noch Graphit enthalten. Das damit beschichtete Saatgut keimt schneller als unbehandeltes. Nachteilig ist jedoch, daß die hochmolekularen, vernetzten Polymerisate biologisch praktisch nicht abbaubar sind.

Der vorliegenden Erfindung liegt die Aufgabe zugrunde, weitgehend biologisch abbaubare Beschichtungsmittel für Saatgut zur Verfügung zu stellen.

Die Aufgabe wird erfindungsgemäß gelöst mit wasserlöslichen Copolymerisaten auf Basis von monoethylenisch ungesättigten Carbonsäuren mit 3 bis 6 C-Atomen, wenn die Copolymerisate einen K-Wert von 8 bis 100, vorzugsweise 20 bis 80 (bestimmt am Natriumsalz nach H. Fikentscher in wäßriger Losung bei 25 °C, einem pH-Wert von 7 und einer Polymerkonzentration des Na-Salzes von 1 Gew.%) haben und

a) 99 bis 15 Mol% wenigstens einer monoethylenisch ungesättigten $C_3$- bis $C_6$-Monocarbonsäure,
b) 0,5 bis 84,5 Mol% wenigstens einer monoethylenisch ungesättigten $C_4$- bis $C_6$-Dicarbonsäure,
c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren,
d) 0 bis 30 Mol% anderen, mit a), b) und c) copolymerisierbaren, wasserlöslichen, monoethylenisch ungesättigten Monomeren, mit Ausnahme von Estern der Acrylsäure und Methacrylsäure mit Polyalkylenglykolen, und
e) 0.5 bis 15 Mol% wenigstens eines mindestens zwei ethylenisch ungesättigte, nicht konjugierte Doppelbindungen aufweisenden Comonomers, das mindestens eine -CO-OX-Gruppe hat, in der X ein Wasserstoff-, ein Alkalimetall- oder Erdalkalimetalläquivalent oder eine Ammoniumgruppe bedeutet,

mit der Maßgabe einpolymerisiert enthalten, daß die Summe der Angaben in Mol% a) bis e) immer 100 beträgt.

Die Erfindung betrifft außerdem wasserlösliche Copolymerisate auf Basis von monoethylenisch ungesättigten Carbonsäuren mit 3 bis 6 C-Atomen mit einem K-Wert von 8 bis 100 (bestimmt am Na-Salz nach H. Fikentscher in wäßriger Lösung bei 25 °C, einem pH-Wert von 7 und einer Polymerkonzentration des Na-Salzes von 1 Gew.%) und die außer

a) mindestens 15 Mol% wenigstens einer monoethylenisch ungesättigten $C_3$- bis $C_6$-Monocarbonsäure,
b) 0,5 bis 84,5 Mol% wenigstens einer monoethylenisch ungesättigten $C_4$- bis $C_6$-Dicarbonsäure,
c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren,
d) 0 bis 30 Mol% anderen, mit a), b) und c) copolymerisierbaren, wasserlöslichen, monoethylenisch ungesättigten Monomeren, mit Ausnahme von Estern der Acrylsäure und Methacrylsäure mit Polyalkylenglykolen, und
e) 0,5 bis 15 Mol% wenigstens eines mindestens zwei ethylenisch ungesättigte, nicht konjugierte Doppelbindungen aufweisenden Comonomers, das mindestens eine -CO-OX-Gruppe hat, in der X ein Wasserstoff-, ein Alkalimetall- oder Erdalkalimetalläquivalent oder eine Ammoniumgruppe bedeutet noch zusätzlich
f) 0,05 bis 10 Mol% wenigstens eines von e) verschiedenen Comonomers, das mindestens zwei ethylenisch ungesättigte, nicht konjugierte Doppelbindungen aufweist,

mit der Maßgabe einpolymerisiert enthalten, daß die Summe der Angaben in Mol% a) bis f) immer 100 beträgt.

Die wasserlöslichen Copolymerisate werden hergestellt durch Copolymerisieren von Monomergemischen aus

a) 99 bis 15 Mol% wenigstens einer monoethylenisch ungesättigten $C_3$- bis $C_6$-Monocarbonsäure,
b) 0,5 bis 84,5 Mol% wenigstens einer monoethylenisch ungesättigten $C_4$- bis $C_6$-Dicarbonsäure,
c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren und
d) 0 bis 30 Mol% anderen, mit a), b) und c) copolymerisierbaren, wasserlöslichen, monoethylenisch ungesättigten Monomeren, mit Ausnahme von Estern der Acrylsäure und Methacrylsäure mit Polyalkylenglykolen

in wäßriger Lösung in Gegenwart von Polymerisationsinitiatoren, mit der Maßgabe, daß die Copolymerisation in Anwesenheit von

e) 0,5 bis 15 Mol% wenigstens eines mindestens zwei ethylenisch ungesättigte, nicht konjugierte Doppelbindungen aufweisenden Comonomers, das mindestens eine -CO-OX -Gruppe hat, in der X = H, ein Alkalimetall- oder Erdalkalimetalläquivalent oder eine Ammoniumgruppe bedeutet,

durchgeführt wird, wobei die Summe der Angaben in Mol% a) bis e) immer 100 beträgt.

Sofern die wasserlöslichen Copolymerisate noch Monomere der Gruppe f) enthalten, werden sie durch Copolymerisieren von Monomergemischen aus

a) mindestens 15 Mol% einer monoethylenisch ungesättigten $C_3$- bis $C_6$-Monocarbonsäure,

b) 0,5 bis 84,5 Mol% einer monoethylenisch ungesättigten $C_4$- bis $C_6$-Dicarbonsäure,

c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren,

d) 0 bis 30 Mol% anderen, mit a), b) und c) copolymerisierbaren, wasserlöslichen, monoethylenisch ungesättigten Monomeren, mit Ausnahme von Estern der Acrylsäure und Methacrylsäure mit Polyalkylenglykolen

in wäßriger Lösung in Gegenwart von Polymerisationsinitiatoren und Reglern hergestellt, wobei die Copolymerisation in Anwesenheit von

e) 0,5 bis 15 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet und

f) 0,05 bis 10 Mol% wenigstens eines von e) verschiedenen Comonomers, das mindestens zwei ethylenisch ungesättigte, nicht konjugierte Doppelbindungen aufweist

mit der Maßgabe durchgeführt wird, daß die Summe der Angaben in Mol% a) bis f) immer 100 beträgt.

Als Komponente a) der wasserlöslichen Copolymerisate kommen monoethylenisch ungesättigte $C_3$- bis $C_6$-Monocarbonsäuren in Betracht. Geeignete Carbonsäuren dieser Art sind beispielsweise Acrylsäure, Methacrylsäure, Ethacrylsäure, Vinylessigsäure, Allylessigsäure und Crotonsäure. Vorzugsweise verwendet man als Monomer der Komponente a) Acrylsäure und/oder Methacrylsäure. Die Monomeren der Komponente a) sind zu 99 bis 15, vorzugsweise 90 bis 20 Mol% am Aufbau des Copolymerisats beteiligt.

Als Monomer der Komponente b) werden monoethylenisch ungesättigte $C_4$-bis $C_6$-Dicarbonsäuren eingesetzt. Hierbei handelt es sich beispielsweise um Maleinsäure, Itaconsäure, Citraconsäure, Mesaconsäure, Fumarsäure und Methylenmalonsäure. Vorzugsweise kommen Maleinsäure oder Itaconsäure als Monomer b) zur Anwendung. Die Monomeren b) sind zu 0,5 bis 84,5, vorzugsweise 5 bis 60 Mol% am Aufbau der Copolymerisate beteiligt.

Die Copolymerisate können gegebenenfalls Hydroxyalkylester mit 2 bis 6 C-Atomen in der Hydroxyalkylgruppe von monoethylenisch ungesättigten $C_3$- bis $C_6$-Carbonsäruen als Komponente c) einpolymerisiert enthalten. Die Hydroxyalkylestergruppen dieser Gruppe von Monomeren leiten sich von mehrwertigen Alkoholen ab, z.B. Glykol, Glycerin, Propandiol-1,2, Propandiol-1,3, Butandiol-1,4, Butandiol-1,3, Butandiol-2,3, Gemische der Butandiole oder Propandiole, Hexandiol-1,6 und Neopentylglykol. Die mehrwertigen Alkohole werden mit monoethylenisch ungesättigten $C_3$- bis $C_6$-Carbonsäuren verestert. Hierbei handelt es sich um diejenigen Carbonsäuren, die oben unter a) und b) genannt sind. Als Komponente c) eignen sich somit beispielsweise Hydroxyethylacrylat, Hydroxyethylmethacrylat, Hydroxy-n-propylmethacrylat, Hydroxy-n-propylacrylat, Hydroxyisopropylacrylat, Hydroxyisopropylmethacrylat, Hydroxy-n-butylacrylat, Hydroxyisobutylacrylat, Hydroxy-n-butylmethacrylat, Hydroxyisobutylmethacrylat, Hydroxyethylmonomaleinat, Hydroxyethyldimaleinat, Hydroxypropylmonobutyldimaleinat und Hydroxyethylmonoitaconat. Von den Hydroxyalkylestern der monoethylenisch ungesättigten Dicarbonsäuren kommen sowohl die Mono- als auch die Diester der Dicarbonsäuren mit den oben genannten mehrwertigen Alkoholen in Betracht.

Vorzugsweise verwendet man als Komponente c) Hydroxyethylacrylat, Hydroxyethylmethacrylat, Butan-1,4-diolmonoacrylat und die technischen Gemische von Hydroxypropylacrylaten. Hierbei sind von besonderer technischer Bedeutung die Isomerengemische aus 2-Hydroxy-1-propylacrylat und 1-Hydroxy-2-propylacrylat. Diese Hydroxyalkylacrylate werden durch Umsetzung von Acrylsäure mit Propylenoxid hergestellt. Die Monomeren der Gruppe c) sind zu 0 bis 20, vorzugsweise 0 bis 15 Mol% in polymerisierter Form im Copolymerisat enthalten.

Die Copolymerisate können gegebenenfalls als Komponente d) andere, mit den übrigen Monomeren copolymerisierbare, wasserlösliche monoethylenisch ungesättigte Monomere enthalten. Geeignete Monomere dieser Art sind beispielsweise Acrylamid, Methacrylamid, 2-Acrylamido-2-methylpropansulfonsäure, Vinylsulfonsäure, Allylsulfonsäure, Vinylphosphonsäure, Allylphosphonsäure, Acrylnitril, Methacrylnitril, Dimethylaminoethylacryat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-2-imidazolin, Vinylacetat sowie Mischungen der genannten Monomeren. Diejenigen Monomeren dieser Gruppe, die Säuregruppen enthalten, können bei der Copolymerisation in Form der freien Säuregruppen oder auch in partiell oder vollständig mit Alkalimetallbasen oder Ammoniumbasen neutralisierter Form eingesetzt werden. Die basischen Acrylate, wie Diethylaminoethylacrylat, werden mit Säuren neutralisiert bzw. quaternisiert und dann der Copolymerisation unterworfen. Die Monomeren d) sind zu 0 bis 30, vorzugsweise 0 bis 20 Mol% am Aufbau der Copolymerisate beteiligt. Sie dienen lediglich zur Modifizierung der Copolymerisate.

Wesentlicher Bestandteil der Copolymerisate sind dagegen die Monomere der Komponente e). Hierbei handelt es sich um Comonomere, die mindestens zwei ethylenisch ungesättigte, nicht konjugierte Doppelbindungen und mindestens eine -CO-OH-Gruppe und/oder deren Salz mit einer Alkalimetall-, Ammonium- oder Erdalkalimetallbase aufweisen. Diese Comonomeren bewirken eine Erhöhung des Molekulargewichts der Copolymerisate und sind zu 0,5 bis 15, vorzugsweise 1 bis 12 Mol% am Aufbau der Copolymerisate beteiligt.

Die Comonomeren e) sind erhältlich durch Umsetzung von

e1) Maleinsäureanhydrid, Itaconsäureanhydrid, Citraconsäureanhydrid oder deren Gemischen mit

e2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Diaminen, polyalkylenpolyaminen, Polyethyleniminen, Aminoalkoholen, Hydroxi-amino- oder -diaminocarbonsäuren, wie insbesondere Lysin und Serin, wasserlöslichen Copolymerisaten aus Ethylenoxid und Kohlendioxid, Polyvinylalkohol eines Molekulargewichts bis 10.000, Allylalkohol, Allylamin, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen.

Mehrwertige, 2 bis 6 C-Atome aufweisende Alkohole sind beispielsweise Glykol, Glycerin, Pentaerythrit und Monosaccharide, wie Glucose, Mannose, Galactose, Uronsäuren wie Galacturonsäure und Zuckersäuren, wie Schleimsäure oder Galactonsäure.

Unter wasserlöslichen Polyalkylenglykolen sollen die Anlagerungsprodukte von Ethylenoxid, Propylenoxid, n-Butylenoxid und Isobutylenoxid oder deren Gemischen an mehrwertige, 2 bis 6 Kohlenstoffatome aufweisende Alkohole verstanden werden, z.B. die Anlagerungsprodukte von Ethylenoxid an Glykol, Anlagerungsprodukte von Ethylenoxid an Glycerin, Anlagerungsprodukte von Ethylenoxid an Pentaerythrit, Anlagerungsprodukte von Ethylenoxid an Monosaccharide, sowie die Anlagerungsprodukte von Mischungen der genannten Alkylenoxide an mehrwertige Alkohole. Bei diesen Anlagerungsprodukten kann es sich um Blockcopolymerisate von Ethylenoxid und Propylenoxid, von Ethylenoxid und Butylenoxiden oder von Ethylenoxid, Propylenoxid und Butylenoxiden handeln. Außer den Blockcopolymerisaten kommen solche Anlagerungsprodukte in Betracht, die die genannten Alkylenoxide in statistischer Verteilung einpolymerisiert enthalten.

Das Molekulargewicht der Polyalkylenglykole beträgt zweckmäßigerweise bis zu 5.000, vorzugsweise bis 2.000. Von den wasserlöslichen Polyalkylenglykolen verwendet man vorzugsweise Diethylenglykol, Triethylenglykol, Tetraethylenglykol und Polyethylenglykol eines Molekulargewichts von bis zu 1.500.

Als Komponente e2) kommen außerdem Polyglycerine eines Molekulargewichts bis 2.000 in Betracht. Vorzugsweise verwendet man von dieser Stoffklasse Diglycerin, Triglycerin und Tetraglycerin.

Geeignete Polyamine sind beispielsweise bevorzugt Diamine, wie Ethylendiamin, 1,3-Propylendiamin, 1,4-Butylendiamin, 1,6-Hexamethylendiamin und Melamin. Als Polyalkylenpolyamine kommen beispielsweise Diethylentriamin, Triethylentetramin, Pentaethylenhexamin, N-(3-Aminopropyl)-1,3-propandiamin und 3-(2-Aminoethyl)-aminopropylamin in Betracht. Besonders geeignete Polyethylenimine haben ein Molekulargewicht bis 5.000.

Als Komponente e2) kommen außerdem Aminoalkohole, wie Ethanolamin, 2-Aminopropanol-1, Neopentanolamin und 1-Methylamino-2-propanol in Betracht.

Als Komponente e2) eignen sich außerdem wasserlösliche Copolymerisate aus Ethylenoxid und Kohlendioxid, die durch Copolymerisieren von Ethylenoxid und Kohlendioxid erhältlich sind. Außerdem kommen Polyvinylalkohole eines Molekulargewichts bis 10.000, vorzugsweise Polyvinylalkohole mit einem Molekulargewicht bis zu 2.000 in Betracht. Die Polyvinylalkohole, die durch Hydrolyse aus Polyvinylacetat hergestellt werden, können ganz oder teilweise hydrolysiert sein. Weitere geeignete Verbindungen der Komponente e2) sind Lysin, Serin, Allylalkohol, Allylamin und Hydroxyalkylester mit 2 bis 6 C-Atomen in der Hydroxyalkylgruppe von monoethylenisch ungesättigten $C_3$- bis $C_6$-Mono- und Dicarbonsäuren. Derartige Verbindungen sind bereits oben in einem anderen Zusammenhang, nämlich als Monomer der Komponente c), beschrieben worden. Außerdem eignen sich Hydroxyalkylester von gesättigten $C_3$- bis $C_6$-Hydroxycarbonsäuren, wie Hydroxyessigsäureglykol(mono)ester, Milchsäureglycol(mono)ester, Hydroxypivalinsäureneopentylglycol(mono)ester.

Vorzugsweise werden Comonomere e) aus Maleinsäureanhydrid und Ethylenglykol, Polyethylenglykol eines Molekulargewichts bis 2.000, Glycerin, Diglycerin, Triglycerin, Tetraglycerin, sowie Polyglycerinen eines Molekulargewichts bis 2.000, Pentaerythrit, Monosacchariden, Neopentylglykol, $\alpha,\omega$-Diaminen mit 2 bis 6 C-Atomen, $\alpha,\omega$-Diolen mit 3 bis 6 C-Atomen und Hydroxypivalinsäureneopentylglykolester eingesetzt. Comonomere e), die sich von Maleinsäureanhydrid und $\alpha,\omega$-Diolen ableiten, können z.B. mit Hilfe folgender

Formel dargestellt werden:

$$XOOC{-}CH{=}CH{-}CO{-}O{-}\left[CH_2{-}CH_2{-}O\right]_n{-}CO{-}CH{=}CH{-}COOX \qquad (I),$$

in der X = H, Alkalimetall oder eine Ammoniumgruppe und n = 1 bis 120, vorzugsweise bis 50 bedeutet.

Comonomere e) die beispielsweise durch Umsetzung von Maleinsäureanhydrid mit $\alpha,\omega$-Diaminen entstehen, können z.B. mit Hilfe folgender Formel

$$XOOC\text{-}CH=CH\text{-}CO\text{-}NH\text{-}CH_2\text{-}(CH_2)_n\text{-}CH_2\text{-}NH\text{-}CO\text{-}CH=CH\text{-}COOX \qquad (II),$$

in der X = H, Alkalimetall oder eine Ammoniumgruppe und n = 0 bis 4 bedeutet, charakterisiert werden.

Die wasserlöslichen Copolymerisate weren durch Copolymerisieren von Monomerengemischen aus

a) 99 bis 15 Mol% wenigstens einer monoethylenisch ungesättigten $C_3$- bis $C_6$-Monocarbonsäure,

b) 0,5 bis 84,5 Mol% wenigstens einer monoethylenisch ungesättigten $C_4$- bis $C_6$-Dicarbonsäure,

c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren, und

d) 0 bis 30 Mol% anderen, mit a), b) und c) copolymerisierbaren, wasserlöslichen, monoethylenisch ungesättigten Monomeren in wäßriger Lösung in Gegenwart von Polymerisationsinitiatoren und gemäß Erfindung zusätzlich in Gegenwart von

e) 0,5 bis 15 Mol% eines mindestens zwei ethylenisch ungesättigte, nicht konjugierte Doppelbindungen und mindestens eine -CO-OH -Gruppe und/oder deren Salz mit einer Alkalimetall-, Ammonium- oder Erdalkalimetallbase aufweisenden Comonomers hergestellt.

Die Summe der Angaben in Mol% der Komponenten a) bis e) beträgt immer 100. Die Copolymerisation wird in wäßrigem Medium, vorzugsweise in rein wäßrigem Medium, durchgeführt. Sie kann nach verschiedenen Verfahrensvarianten erfolgen, z.B. kann man die Monomeren a) bis e) in Form wäßriger Lösungen diskontinuierlich in einer Batch-Fahrweise polymerisieren. Außerdem ist es möglich, zunächst einen Teil der Monomeren und einen Teil des Initiators im Polymerisationsreaktor vorzulegen, unter Inertgasatmosphäre auf die Polymerisationstemperatur zu erwärmen und dann die übrigen Monomeren und den Initiator nach Fortschritt der Polymerisation dem Reaktor zuzugeben. Die Polymerisationstemperaturen liegen im Bereich von 20 bis 200 °C. Bei Temperaturen oberhalb von 100 °C arbeitet man in Druckapparaturen. Vorzugsweise beträgt die Polymerisationstemperatur 50 bis 150 °C.

In einer bevorzugten Ausführungsform des Herstellverfahrens wird zunächst das Comonomer e) hergestellt, indem man

e1) Maleinsäureanhydrid, Itaconsäureanhydrid, Citraconsäureanhydrid oder deren Gemische in einem Reaktor vorlegt und darin mit

e2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerine eines Molekulargewichts bis 2.000, Diaminen, Polyalkylenpolyaminen, Polyethyleniminen, Aminoalkohole, Lysin, Serin, wasserlöslichen Copolymerisaten aus Ethylenoxid und Kohlendioxid, Polyvinylalkohol eines Molekulargewichts bis 10.000, Allylalkohol, Allylamin, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen

bei Temperaturen von 50 bis 200 °C umsetzt. Deise Umsetzung wird vorzugsweise in Abwesenheit von Wasser vorgenommen, geringe Mengen an Wasser stören dabei jedoch dann nicht, wenn die Komponente e1) in entsprechendem Überschuß eingesetzt wird. Anstelle von den unter e1) genannten Verbindungen kann man jedoch auch die sich davon ableitenden Mono- oder Diester mit $C_1$- bis $C_4$-Alkoholen einsetzen. In diesen Fällen wird eine Umesterung bzw. Amidierung durchgeführt und vorzugsweise der dabei entstehende $C_1$- bis $C_4$-Alkohol aus dem Reaktionsgemisch abdestilliert. Bei Einsatz von Aminogruppen enthaltenden Verbindungen, die unter e2) genannt sind, entstehen bei der Umsetzung mit den Mono- oder Diestern der Säureanhydride gemäß e1) die entsprechenden Amide. Falls bei der Herstellung der Comonomeren e) Ester der Komponente e1) eingesetzt werden, so sind dies vorzugsweise Maleinsäuredimethylester, Maleinsäuremonomethylester, Itaconsäuredimethylester, Maleinsäuremonoisopropylester und Maleinsäurediisopropylester. Gegebenenfalls können übliche Veresterungskatalysatoren mitverwendet werden.

Pro Mol der Verbindungen e2) setzt man mindestens 0,5 Mol einer Verbindung der Komponente e1) ein. Die Temperatur bei der Umsetzung beträgt vorzugsweise 50 bis 150 °C. Die Reaktion wird soweit

geführt, daß praktisch ein quantitativer Umsatz der Komponente e2) gegeben ist. Die üblicherweise in einem Überschuß verwendete Komponente e1) kann nach Beendigung der Comonomerherstellung im Reaktionsgemisch verbleiben. Das Comonomer kann in diesem Fall in einer monoethylenisch ungesättigten $C_3$- bis $C_6$-Monocarbonsäure gemäß a) gelöst werden und dann zusammen mit dm nicht umgesetzten Teil der Komponente e1) und den übrigen Monomeren der Copolymerisation unterworfen werden. Da die Copolymerisation in wäßrigem Medium erfolgt, wird das überschüssige, im Comonomer noch enthaltene Dicarbonsäureanhydrid gemäß e1) zu der entsprechenden Dicarbonsäure hydrolysiert. Diese Dicarbonsäure ist dann als das Comonomer b) aufzufassen.

Das zunächst hergestellte Comonomer e), das noch überschüssiges Dicarbonsäureanhydrid enthält, kann jedoch auch im Reaktionsgemisch, in dem es hergestellt wurde, verbleiben und darin zunächst durch Zugabe von Wasser bzw. verdünnter wäßriger Natronlauge gelöst werden. Hierbei wird das noch vorhandene Dicarbonsäureanhydrid hydrolysiert. Diese Monomermischung wird anschließend durch Zugabe der übrigen Comonomeren copolymerisiert. Die Copolymerisation der Monomeren a) bis e) wird bei einem pH-Wert der wäßrigen Lösung von 2 bis 9, vorzugsweise von 3 bis 7 durchgeführt. Die Monomeren a), b) und e), die jeweils Carbonsäuregruppen enthalten, können in Form der freien Carbonsäuren oder in neutralisierter, vorzugsweise in partiell neutralisierter Form copolymerisiert werden, wobei der Neutralisationsgrad 0 bis 100, vorzugsweise 40 bis 90 Mol% beträgt. Die Neutralisation erfolgt vorzugsweise mit Alkalimetall- oder Ammoniumbasen. Hierunter sind beispielsweise Natronlauge, Kalilauge, Soda, Pottasche oder Ammoniumbasen wie Ammoniak, $C_1$- bis $C_{18}$-Alkylamine, Dialkylamine, wie Dimethylamin, Di-n-butylamin, Dihexylamin, tertiäre Amine wie Trimethylamin, Triethylamin, Tributylamin, Triethanolamin sowie quaternisierte Stickstoffbasen, z.B. Tetramethylammoniumhydroxid, Trimethyllaurylammoniumhydroxid und Trimethylbenzylammoniumhydroxid zu verstehen. Vorzugsweise verwendet man zum Neutralisieren Natronlauge, Kalilauge oder Ammoniak. Die Neutralisation kann jedoch auch mit Erdalkalimetallbasen, z.B. Ca-Hydroxid oder $MgCO_3$, vorgenommen werden.

Als Polymerisationsinitiatoren werden vorzugsweise wasserlösliche Radikalbildende Verbindungen eingesetzt, z.B. Wasserstoffperoxid, Peroxidisulfate und Mischungen aus Wasserstoffperoxid und Peroxidisulfaten. Geeignete Peroxidisulfate sind beispielsweise Lithium-, Natrium-, Kalium- und Ammoniumperoxidisulfat. Bei Mischungen aus Wasserstoffperoxid und Peroxidisulfat kann jedes beliebige Verhältnis eingestellt werden, vorzugsweise verwendet man Wasserstoffperoxid und Peroxidisulfat im Gewichtsverhältnis 3:1 bis 1:3. Mischungen aus Wasserstoffperoxid und Natriumperoxidisulfat werden vorzugsweise im Gewichtsverhältnis von 1:1 angewendet. Die oben genannten wasserlöslichen Polymerisationsinitiatoren können gegebenenfalls auch in Kombination mit Reduktionsmitteln, z.B. Eisen-II-sulfat, Natriumsulfit, Natriumhydrogensulfit, Natriumdithionit, Triethanolamin und Ascorbinsäure in Form der sogenannten Redox-Initiatoren verwendet werden. Geeignete wasserlösliche organische Peroxide sind beispielsweise Acetylacetonperoxid, Methylethylketonperoxid, tert.-Butylhydroperoxid und Cumolhydroperoxid. Auch die wasserlöslichen organischen Peroxide können mit den oben genannten Reduktionsmitteln eingesetzt werden. Weitere wasserlösliche Polymerisationsinitiatoren sind Azostarter, z.B. 2,2′-Azo-bis(2-amidinopropan)dihydrochlorid, 2,2′-Azobis(N,N′-dimethylen)isobutyramidin-dihydrochlorid, 2-(Carbamoylazo)isobutyronitril und 4,4′-Azo-bis-(4-cyanovaleriansäure). Mann kann die Polymerisation auch mit wasserunlöslichen Initiatoren, wie Dibenzoylperoxid, Dicyclohexylperoxidicarbonat, Dilaurylperoxid oder Azodiisobutyronitril, starten.

Die Initiatoren werden in Mengen von 0,1 bis 10, vorzugsweise 0,5 bis 7 Gew.%, bezogen auf die Summe der bei der polymerisation eingesetzten Monomeren, angewendet. Die Polymerisationsinitiatoren können entweder zusammen mit dem Monomeren oder getrennt davon in Form von wäßrigen Lösungen kontinuierlich oder absatzweise der zu polymerisierenden Mischung zugegeben werden.

Die Copolymerisation kann gegebenenfalls auch in Gegenwart von Reglern durchgeführt werden. Hierfür verwendet man vorzugsweise wasserlösliche Verbindungen, die entweder in jedem Verhältnis mit Wasser mischbar sind oder sich zu mehr als 5 Gew.% darin bei einer Temperatur von 20 °C lösen. Verbindungen dieser Art sind beispielsweise Aldehyde mit 1 bis 4 Kohlenstoffatomen, wie Formaldehyd, Acetaldehyd, Propionaldehyd, n-Butyraldehyd und Isobutyraldehyd, Ameisensäure, Ammoniumformiat, Hydroxylammoniumsalze, insbesondere Hydroxylammoniumsulfat, SH-Gruppen enthaltende Verbindungen mit bis zu 6 Kohlenstoffatomen, wie Thioglykolsäure, Mercaptoalkohole, wie Mercaptoethanol, Mercaptopropanol, Mercaptobutanole und Mercaptohexanol, ein- und mehrwertige Alkohole mit bis zu 6 C-Atomen, wie Isopropanol, Glykol, Glycerin und Isobutanol. Vorzugsweise in Betracht kommende Regler sind wasserlösliche Mercaptane, Ammoniumformiat und Hydroxylammoniumsulfat. Die Regler werden in Mengen von 0 bis 25 Gew.%, bezogen auf die Summe der bei der Polymerisation eingesetzten Monomeren, verwendet. Die besonders wirksamen Regler, die vorzugsweise in Betracht kommen, werden in Mengen bis höchstens 15 Gew.% eingesetzt. Sofern in Gegenwart von Reglern gearbeitet wird, beträgt die minimale Einsatzmenge 0,2 Gew.%, bezogen auf die zu polymerisierenden Monomeren.

Nach dem erfindungsgemäßen Verfahren polymerisiert man vorzugsweise Monomerengemische aus

a) 99 bis 15 Mol% Acrylsäure, Methacrylsäure oder deren Mischungen,

b) 0,5 bis 84,5 Mol% Maleinsaure und/oder Itaconsäure und

c) 0 bis 20 Mol% Hydroxypropylacrylaten, Hydroxypropylmethacrylaten, Hydroxyethylacrylat, Hydroxyethylmethacrylat, Hydroxybutylacrylaten, Hydroxybutylmethacrylaten oder deren Mischungen und

e) 0,5 bis 15 Mol% eines Comonomers aus e1) Maleinsäureanhydrid und e2) Ethylenglykol, Polyethylenglykol eines Molekulargewichts bis 2.000, Glycerin, Polyglycerinen eines Molekulargewichts bis 2.000, Pentaerythrit, Monosacchariden, Neopentylglykol, $\alpha,\omega$-Diaminen mit 2 bis 6 C-Atomen, $\alpha,\omega$-Diolen mit 3 bis 6 C-Atomen, Hydroxypivalinsäureneopentylglykolester oder Mischungen aus diesen Verbindungen, oder man copolymerisiert Monomergemische aus

a) Acrylsäure und/oder Methacrylsäure und

b) Maleinsäure und/oder Itaconsäure mit

e) einem Comonomer aus e1) Maleinsäureanhydrid und e2) Ethylenglykol, Polyethylenglykol eines Molekulargewichts bis 2.000, Glycerin, Polyglycerinen eines Molekulargewichts bis 2.000, Pentaerythrit, Monosacchariden, Neopentylglykol, $\alpha,\omega$-Diaminen mit 2 bis 6 C-Atomen, $\alpha,\omega$-Diolen mit 3 bis 6 C-Atomen, Hydroxypivalinsäureneopentylglykolmonoester.

Besonders bevorzugt ist die Herstellung von Copolymerisaten aus

a) Acrylsäure und/oder Methacrylsäure,

b) Maleinsäure und

e) einem der oben genannten Comonomeren der Formel (I) oder (II).

Die oben beschriebenen wasserlöslichen Copolymerisate können weiterhin dadurch modifiziert werden, daß sie bis zu 10 Mol% eines Comonomeren der Gruppe f) einpolymerisiert enthalten. Als Comonomer f) werden mindestens zwei ethylenisch ungesättigte Doppelbindungen aufweisende Verbindungen eingesetzt, die nicht unter die Definition der Verbindungen der Gruppe e) fallen. Geeignete Comonomere f) sind beispielsweise N,N'-Methylenbisacrylamid, Polyethylenglykoldiacrylate und Polyethylenglykoldimethylacrylate, die sich jeweils von Polyethylenglykolen eines Molekulargewichts von 106 bis 4000 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bis dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropanidiallylether, Butandioldivinyletler, Pentaerythrittriallylether und/oder Divinylethylenharnstoff. Vorzugsweise setzt man als wasserlösliche Comonomere f) ein, z.B. N,N′-Methylenbisacrylamid, Polyethylenglykoldiacrylate, Polyethylenglykoldimethacrylate, Pentaerythrittriallylether und/oder Divinylharnstoff.

Sofern die Comonomeren der Gruppe f) in die Copolymerisate eingebaut werden, setzt man davon 0,05 bis 10, vorzugsweise 0,1 bis 6 Mol%, bezogen auf die bei der Copolymerisation anwesenden Monomeren, ein.

Wasserlösliche Copolymerisate dieser Art werden hergestellt durch Copolymerisieren von Monomergemischen aus

a) mindestens 15 Mol% wenigstens einer monoethylenisch ungesättigten $C_3$- bis $C_6$-Monocarbonsäure,

b) 0,5 bis 84,5 Mol% wenigstens einer monoethylenisch ungesättigten $C_4$- bis $C_6$-Dicarbonsäure,

c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren, und

d) 0 bis 30 Mol% anderen, mit a), b) und c) copolymerisierbaren, wasserlöslichen, monoethylenisch ungesättigten Monomeren in wäßriger Lösung in Gegenwart von Polymerisationsinitiatoren und Reglern sowie zusätzlich in Gegenwart von

e) 0,5 bis 15 Mol% eines mindestens zwei ethylenisch ungesättigte, nicht konjugierte Doppelbindungen und mindestens eine -CO-OH -Gruppe und/oder deren Salz mit einer Alkalimetall-, Ammonium- oder Erdalkalimetallbase aufweisenden Comonomers und

f) 0,05 bis 10 Mol% wenigstens eines von e) verschiedenen Comonomers, das mindestens zwei ethylenisch ungesättigte, nicht konjugierte Doppelbindungen aufweist.

Die Summe der Angaben in Mol% der Komponenten a) bis f) beträgt immer 100. Die Copolymerisation wird in wäßrigem Medium, vorzugsweise in rein wäßrigem Medium, durchgeführt. Sie kann nach verschiedenen Verfahrensvarianten erfolgen, z.B. kann man die Monomeren a) bis f) in Form wäßriger Lösungen diskontinuierlich in einer Batch-Fahrweise polymerisieren. Außerdem ist es möglich, zunächst einen Teil der Monomeren und einen Teil des Initiators im Polymrisationsreaktor vorzulegen, unter Inertgasatmosphäre auf die Polymerisationstemperatur zu erwärmen und dann die übrigen Monomren und den Initiator nach

Fortschritt der Polymerisation dem Reaktor zuzugeben. Die Polymerisationstemperaturen liegen im Bereich von 20 bis 200 °C. Bei Temperaturen oberhalb von 100 °C arbeitet man in Druckapparaturen. Vorzugsweise beträgt die Polymerisationstemperatur 50 bis 150 °C.

In einer bevorzugten Ausführungsform des Herstellverfahrens wird zunächst das Comonomer e) wie oben beschrieben hergestellt. Die bereits genannten Initiatoren werden in Mengen bis zu 30, vorzugsweise 10 bis 25 Gew.%, bezogen auf die Summe der bei der Polymerisation eingesetzten Monomeren, angewendet. Die Polymerisationsinitiatoren können entweder zusammen mit den Monomeren oder getrennt davon in Form von wäßrigen Lösungen kontinuierlich oder absatzweise der zu polymerisierenden Mischung zugegeben werden.

Die Copolymerisation der Monomeren a) bis f) wird in Gegenwart von Reglern durchgeführt. Hierfür verwendet man vorzugsweise wasserlösliche Verbindungen, die entweder in jedem Verhältnis mit Wasser mischbar sind oder sich zu mehr als 5 Gew.% darin bei einer Temperatur von 20 °C lösen. Verbindungen dieser Art sind beispielsweise Aldehyde mit 1 bis 4 Kohlenstoffatomen, wie Formaldehyd, Acetaldehyd, Propionaldehyd, n-Butyraldehyd und Isobutyraldehyd, Ameisensäure, Ammoniumformiat, Hydroxylammoniumsalze, insbesondere Hydroxylammoniumsulfat, SH-Gruppen enthaltende Verbindungen mit bis zu 6 Kohlenstoffatomen, wie Thioglykolsäure, Mercaptoalkohole, wie Mercaptoethanol, Mercaptopropanol, Mercaptobutanole und Mercaptohexanol, ein- und mehrwertige Alkohole mit bis zu 6 C-Atomen, wie Isopropanol, Glykol, Glycerin und Isobutanol. Vorzugsweise in Betracht kommende Regler sind wasserlösliche Mercaptane, Ammoniumformiat und Hydroxylammoniumsulfat. Die Regler werden in Mengen von 0,2 bis 25 Gew.%, bezogen auf die Summe der bei der Polymerisation eingesetzten Monomeren, verwendet. Die besonders wirksamen Regler, die vorzugsweise in Betracht kommen, werden in Mengen bis höchstens 15 Gew.% eingesetzt.

Nach dem erfindungsgemäßen Verfahren polymerisiert man - sofern die Monomeren f) eingesetzt werden - vorzugsweise Monomergemische aus

a) mindestens 15 Mol% Acrylsäure, Methacrylsäure oder deren Mischungen,

b) 0,5 bis 84,5 Mol% Maleinsäure und/oder Itaconsäure und

c) 0 bis 20 Mol% Hydroxypropylacrylaten, Hydroxypropylmethacrylaten, Hydroxyethylacrylat, Hydroxyethylmethacrylat, Hydroxybutylacrylaten, Hydroxybutylmethacrylaten oder deren Mischungen,

e) 0,5 bis 15 Mol% eines Comonomers aus e1) Maleinsäureanhydrid und e2) Ethylenglykol, Polyethylenglykol eines Molekulargewichts bis 2.000, Glycerin, Polyglycerinen eines Molekulargewichts bis 2.000, Pentaerythrit, Monosacchariden, Neopentylglykol, $\alpha,\omega$-Diaminen mit 2 bis 6 C-Atomen, $\alpha,\omega$-Diolen mit 3 bis 6 C-Atomen, Hydroxypivalinsäureneopentylglykolester oder Mischungen aus diesen Verbindungen und

f) 0,05 bis 10 Mol% an Polyethylenglykoldiacrylaten, Polyethylenglykoldimethacrylaten, Ethylenglykoldi(meth)acrylat, Glycerindiacrylat und/oder Glycerindimethacrylat.

Besonders bevorzugt ist dabei die Herstellung von Copolymerisaten aus

a) Acrylsäure und/oder Methacrylsäure,

b) Maleinsäure,

e) einem der oben genannten Comonomeren der Formel (I) oder (II) und

f) Polyethylenglykoldiacrylaten, die sich von Polyethylenglykol eines Molekulargewichts von 106 bis 1500 ableiten.

Bei der Copolymerisation der Monomeren a) bis f) werden wäßrige Polymerisatlösungen erhalten, die einen Polymerisatgehalt bis zu 70 Gew.% aufweisen. Es ist selbstverständlich auch möglich, stark verdünnte, z.B. 1 %ige wäßrige Lösungen herzustellen, jedoch wird die Copolymerisation aus wirtschaftlichen Erwägungen so geführt, daß man mindestens 20 gew.%ige wäßrige Copolymerisatlösungen herstellt. Die Lösungen können nach der Copolymerisation auf einen pH-Wert im Bereich von 6,5 bis 7 eingestellt werden, sofern nicht die Polymerisation ohnehin in diesem Bereich durchgeführt wurde. Die Copolymerisate können durch Eindampfen der wäßrigen Lösungen gewonnen werden. Sie haben einen niedrigen Restmonomerengehalt und sind überraschenderweise biologisch abbaubar. Die biologische Abbaubarkeit der erfindungsgemäßen Copolymerisate beträgt nach DIN 38 412, Teil 24, Statischer Test (L25) bis zu 100 %, und liegt in der Regel zwischen 20 und 95 %.

Die Copolymerisate sind wasserlöslich. Falls sie sich in der freien Säureform nicht in Wasser lösen, so gelingt es, sie durch partielle oder vollständige Neutralisation mit NaOH, KOH, Ammoniak oder Aminen in eine wasserlösliche Form zu überführen. Copolymerisate, deren Alkali- oder Ammoniumsalze, von denen sich mindestens 20 g pro Liter Wasser bei einer Temperatur von 20 °C lösen, werden im vorliegenden Zusammenhang als wasserlöslich bezeichnet. Die Copolymerisate haben überraschenderweise den Vorteil, daß sie im Bereich geringer Polymerkonzentrationen keine Ausfällungen in Ca- und/oder Mg-Ionen enthaltenden wäßrigen Lösungen zeigen. Daher kann man stabile Lösungen der Polymerisate in Trinkwasser

herstellen, ohne daß es zu Ausfällungen kommt.

Die Copolymerisate werden als Beschichtungsmittel für Saatgut verwendet. Bei der Saatgutbeschichtung - hier können sämtliche Getreidearten wie Weizen, Roggen, Hafer und Gerste sowie Mais und Lupinen sowie andere Saatgüter mit einem Polymerfilm umhüllt werden - wird ein schnelleres Keimen des Saatguts gegenüber dem nichtbeschichteten Saatgut erreicht. Pro 100 kg Saatgut verwendet man 0,1 bis 1 kg der Copolymerisate. Die Copolymerisate werden vorzugsweise in Form einer verdünnten wäßrigen Lösung auf das Saatgut gesprüht und bilden dort einen schützenden Polymerfilm. In den Polymerfilm können feinteilige, inerte Füllstoffe, z.B. Graphit, Quarz, Talkum oder Bentonit einer Teilchengröße von 20 bis 500 µm eingelagert sein. Die Füllstoffe werden vorzugsweise zusammen mit der Polymerlösung auf das zu beschichtende Material aufgetragen.

Die in den Beispielen angegebenen K-Werte wurden nach H. Fikentscher, Cellulosechemie, Band 13, 58-64 und 71-74 (1932) bestimmt, dabei bedeutet $K = k \cdot 10^3$. Die Messungen wurden am Natriumsalz in wäßriger Lösung bei 25 °C, einem pH-Wert von 7 und einer Polymerkonzentration des Na-Salzes von 1 Gew.% vorgenommen. Sofern erfindungsgemäße Copolymerisate in Form anderer Salze oder der freien Säuren anfallen, müssen sie vor der Bestimmung des K-Wertes zunächst in die Na-Salze umgewandelt werden. Die in den Beispielen angegebenen Molekulargewichte beziehen sich auf das Zahlenmittel des Molekulargewichts.

Beispiel 1

In einem 2 l-fassenden Glasreaktor, der mit Rührer, Thermometer, Stickstoffeinleitung, Kühler und drei Zulaufgefäßen ausgestattet ist, werden 98 g (1 Mol) Maleinsäureanhydrid und 0,1 g p-Toluolsulfonsäure vorgelegt und zusammen mit 0,25 Mol eines in Tabelle 1 jeweils angegebenen Diols 45 min auf eine Temperatur von 60 °C erhitzt. Danach gibt man zu der Schmelze 200 ml Wasser und erhitzt die Lösung 30 min unter Einleiten von Stickstoff und unter Rühren auf eine Temperatur von 90 °C.

Die Copolymerisation wird in der Weise durchgeführt, daß man zu der oben beschriebenen Mischung aus Comonomer und Maleinsäure bei einer Temperatur von 90 °C innerhalb von 5 Stunden 1075 g einer 35 %igen Natriumacrylatlösung (4 Mol) und gleichzeitig damit über einen Zeitraum von 6 Stunden separat vom Monomerenzulauf 55 g 30 %iges Wasserstoffperoxid zufügt, das in 45 ml Wasser gelöst ist. Man erhält eine viskose Lösung, die noch 1 Stunde nach beendeter Zugabe des Polymerisationsinitiators bei 90 °C unter Rühren nachpolymerisiert wird. Die Lösung wird dann abgekühlt und durch Zugabe von 25 %iger wäßriger Natronlauge auf einen pH-Wert von 6,5 eingestellt. In Tabelle 1 sind die jeweils eingesetzten Monomeren sowie die K-Werte der wasserlöslichen Copolymerisate, der Restmonomergehalt und die Daten zur biologischen Abbaubarkeit [bestimmt nach DIN 38 412, Teil 24, Statistischer Test (L25)], der Copolymerisate angegeben.

Tabelle 1

| Nr. | Herstellung des Comonomers aus den Komponenten e1 [Mol] | e2 [Mol] | Bei der Copolymerisation eingesetzte Monomere: Acrylsäure [Mol%] | MSA [Mol%] | Comonomer aus e1)+e2) [Mol%] | Copolymerisat: K-Wert | Restgehalt an Maleinsäure [Gew.%] | Biologische Abbaubarkeit [%] |
|---|---|---|---|---|---|---|---|---|
| 1 | 1 MSA[1)] | 0,25 Ethylenglykol | 84,2 | 10,5 | 5,3 | 64,2 | 0,21 | 45 |
| 2 | 1 MSA | 0,25 Neopentylglykol | 84,2 | 10,5 | 5,3 | 58,6 | 0,15 | 47 |
| 3 | 1 MSA | 0,25 $PEG^{2)}_{400}$ | 84,2 | 10,5 | 5,3 | 30,9 | 0,23 | 62 |
| 4 | 1 MSA | 0,25 $PEG^{3)}_{1500}$ | 84,2 | 10,5 | 5,3 | 25,2 | 0,30 | 89 |

1) MSA = Maleinsäureanhydrid
2) $PEG_{400}$ = Polyethylenglykol eines Molekulargewichts von 400
3) $PEG_{1500}$ = Polyethylenglykol eines Molekulargewichts von 1500

Von den unter 1, 3 und 4 angegebenen Copolymerisaten wurde das Ausfällverhalten bei pH 7,5 in wäßrigen Lösungen geprüft, die 10 bis 10.000 mg/l Ca-Ionen (als $CaCl_2$) enthielten (folgende Ca-Ionenkonzentrationen wurden getestet: 10, 50, 75, 100, 150, 500, 1000 und 10.000 mg/l; die Polymerkonzentrationen wurden von 0,1 bis 7 mg/l variiert, geprüft wurden 0,1, 0,5, 1,0, 2, 3, 4 und 7 mg/l). Dabei traten selbst nach 20 Tagen keine Ausfällungen auf, während ein Copolymerisat aus 30 Gew.% Maleinsäure und 70 Gew.% Acrylsäure (K-Wert 60) unter den oben angegebenen Prüfbedingungen immer Ausfällungen ergab.

Beispiel 2

In einem 2 l-fassenden Reaktor aus Glas, der einem Rührer, Thermometer, Stickstoffeinleitung und drei Zulaufgefäßen ausgestattet ist, von denen 1 Zulaufgefäß heizbar und rührbar ist, werden jeweils 98 g (1 Mol) Maleinsäureanhydrid in 500 ml 4molarer wäßriger Natronlauge gelöst und auf eine Temperatur von 90 °C erhitzt. Gleichzeitig werden in dem beheizbaren Zulaufgefäß 98 g (1 Mol) Maleinsäureanhydrid mit 0,1 g p-Toluolsulfonsäure und den in der Tabelle 2 jeweils angegebenen mehrwertigen Alkoholen versetzt und unter einer Stickstoffatomosphare innerhalb von 0,5 bis 3,5 Stunden bei Temperaturen im Bereich von 60 bis 120 °C geschmolzen.

Die Copolymerisation wird bei einer Temperatur von 90 °C innerhalb von 5 Stunden durchgeführt, indem man 285 g (3 Mol) Natriumacrylat gelöst in 500 ml Wasser, die Schmelze der Comonomere (aus Maleinsäureanhydrid und mehrwertigem Alkohol und nicht reagiertem Maleinsäureanhydrid) und über einen Zeitraum von 6 Stunden, beginnend mit dem Monomerenzulauf, ebenfalls kontinuierlich 90 g 30 %iges Wasserstoffperoxid in 100 ml Wasser zulaufen läßt Man erhält eine viskose wäßrige Lösung die noch 1 Stunde nach Beendigung der Initiatorzugabe bei einer Temperatur von 90 °C nachpolymerisiert wird. Die wäßrige Lösung wird nach dem Abkühlen mit 25 %iger wäßriger Natronlauge auf einen pH-Wert von 6,5 eingestellt. Die Einsatzstoffe, die K-Werte, der Restmaleinsäuregehalt und die Daten zur biologischen Abbaubarkeit der Copolymerisate sind in Tabelle 2 angegeben.

Die biologische Abbaubarkeit der in Tabelle 2 beschriebenen Copolymerisate wurde zusätzlich durch Bakterienwachstumsversuche nachgewiesen. Hierfür wurde auf festen Nährböden ein Anreicherungsmedium hergestellt und mit 18 g/l Agar verfestigt. Das Anreicherungsmedium hatte folgende Zusammensetzung:

| | |
|---|---|
| Dinatriumhydrogenphosphat mit 2 Wasser | 7 g/l |
| Kaliumdihydrogenphosphat | 3 g/l |
| Natriumchlorid | 0,5 g/l |
| Ammoniumchlorid | 1,0 g/l |
| Lösung von Spurenelementen | 2,5 ml/l pH 7.0 |
| (hergestellt nach T. Bauchop und S.R. Elsden, J.gen.Mikrobiol. 23, 457-469 (1960)). | |

Die zu prüfenden Copolymerisate wurden den Nährmedien in Konzentrationen von 10 g/l zugegeben.

Erdproben wurden entweder in Flüssigmedium gegeben und dort 7 Tage bei 30 °C geschüttelt oder als wäßrige Suspension direkt auf feste Nährböden gebracht und ebenfalls bei 30 °C inkubiert. Die Anreicherungskulturen in Flüssigmedium wurden nach 7 Tagen auf feste Nährböden übertragen. Von diesen Platten wurden gut wachsende Kolonien abgeimpft und im Vereinzelungsausstrich auf Einheitlichkeit geprüft.

Auf diese Weise wurden Bakterienreinkulturen isoliert, die auf allen in Tabelle 2 angegebenen Copolymerisaten eindeutig Wachstum zeigen.

Wurde die oben beschriebenen Bakterienwachstumsversuche zum Vergleich mit einem Copolymerisat aus 30 Gew.% Maleinsäure und 70 Gew.% Acrylsäure (K-Wert 60) durchgeführt, so konnte kein Bakterienwachstum nachgewiesen werden.

Tabelle 2

| Herstellung des Comonomern im Zulaufgefäß aus den Komponenten | | | | | Copolymerisation | | | Copolymerisat | | Biologische Abbaubarkeit [%] |
|---|---|---|---|---|---|---|---|---|---|---|
| e1 [Mol] | e2 [Mol] | | Temperatur [°C] | Reaktionszeit [h] | Acrylsäure [Mol%] | Maleinsäure (aus der Vorlage und dem Zulauf) [Mol%] | Comonomer aus e1+e2 [Mol%] | K-Wert | Restgehalt an Maleinsäure [Gew.%] | |
| 1 MSA | 0,25 | Ethylenglykol | 60 | 0,5 | 63,1 | 31,6 | 5,3 | 31,8 | 0,20 | 77 |
| 1 MSA | 0,25 | Butandiol | 60 | 0,75 | 63,1 | 31,6 | 5,3 | 36,7 | 0,18 | 79 |
| 1 MSA | 0,25 | Neopentylglykol | 60 | 0,75 | 63,1 | 31,6 | 5,3 | 36,7 | 0,21 | 83 |
| 1 MSA | 0,25 | HPN[1)] | 100 | 1,5 | 63,1 | 31,6 | 5,3 | 30,3 | 0,23 | 85 |
| 1 MSA | 0,25 | Diethylenglykol | 100 | 1,0 | 63,1 | 31,6 | 5,3 | 27,6 | 0,15 | 84 |
| 1 MSA | 0,25 | $PEG_{400}$ | 90 | 2,0 | 63,1 | 31,6 | 5,3 | 40,2 | 0,30 | 63 |
| 1 MSA | 0,25 | Glycerin | 80 | 3,0 | 62,5 | 33,3 | 4,2 | 36,2 | 0,26 | 78 |
| 1 MSA | 0,125 | Diglycerin | 90 | 3,5 | 64,9 | 32,4 | 2,7 | 28,4 | 0,31 | 76 |
| 1 MSA | 0,08 | Tetraglycerin | 90 | 3,5 | 65,3 | 33,0 | 1,7 | 22,6 | 0,31 | 86 |
| 1 MSA | 0,125 | Pentaerythrit | 100 | 3,5 | 64,9 | 32,4 | 2,7 | 37,6 | 0,24 | 88 |

1) HPN = Hydroxypivalinsäureneopentylglykolmonoester

Beispiel 3

In einem 2 l-fassenden Reaktor aus Glas, der mit Rührer, Thermometer, Stickstoffeinleitung und drei Zulaufgefäßen ausgestattet ist, von denen 1 Zulaufgefäß beheizbar und rührbar ist, werden 98 g (1 Mol)

Maleinsäureanhydrid in 500 ml 4molarer wäßriger Natronlauge gelöst und unter Zugabe von 24,5 g Hydroxylammoniumsulfat auf eine Temperatur von 90 °C erhitzt. Gleichzeitig damit werden in dem beheizbaren Zulaufgefäß 98 g (1 Mol) Maleinsäureanhydrid mit jeweils 0,4 Mol der in Tabelle 3 angegebenen Diole und 0,1 g p-Toluolsulfonsäure versetzt und unter Stickstoff bei 60 °C 60 min lang geschmolzen. Die Schmelze wird auf 20 °C abgekühlt und in 86 g (1 Mol) Methacrylsäure gelöst.

Zu der auf 90 °C erwärmten Vorlage gibt man gleichzeitig und jeweils kontinuierlich über einen Zeitraum von 5 Stunden 285 g (3 Mol) Natriumacrylat gelöst in 500 ml Wasser und die in dem beheizbaren Zulaufgefäß bereitete Lösung des Comonomers (das noch überschüssiges Maleinsäureanhydrid enthält und das in Methacrylsäure gelöst ist) sowie ebenfalls beginnend mit dem Monomerenzulauf, innerhalb von 6 Stunden 90 g 30 %iges Wasserstoffperoxid gelöst in 100 ml Wasser. Während der Copolymerisation wird das Reaktionsgemisch gerührt und mit Stickstoff gespült. Die viskose Lösung wird jeweils 1 Stunde bei einer Temperatur von 95 °C nachpolymerisiert und nach dem Abkühlen auf 30 °C mit 25 %iger wäßriger Natronlauge auf einen pH-Wert von 6,5 eingestellt. Die jeweils verwendeten Einsatzstoffe sowie die K-Werte der Copolymerisate, deren Restgehalt an Maleinsäure und die DAten zur biologischen Abbaubarkeit sind in Tabelle 3 angegeben.

Tabelle 3

| Herstellung des Comonomeren im Zulaufgefäß aus den Komponenten | | Copolymerisation von | | | Copolymerisat | | |
|---|---|---|---|---|---|---|---|
| e1 [Mol] | e2 [Mol] | Komponente (a) [Mol%] | Komponente (b) aus der Vorlage und dem Zulauf [Mol%] | Comonomer e) aus e1)+ e2) [Mol%] | K-Wert | Restgehalt an Maleinsäure [Gew.%] | Biologische Abbaubarkeit [%] |
| 1 MSA | 0,4 Ethylenglykol | 17,85 MAS[1]<br>53,50 AS [2] | 21,5 MS[4] | 7,15 | 23,1 | 0,19 | 81 |
| 1 MSA | 0,4 Neopentylglykol | 17,85 MAS<br>53,50 AS | 21,5 MS | 7,15 | 25,6 | 0,24 | 83 |
| 1 MSA | 0,4 HPN[3] | 17,85 MAS<br>53,50 AS | 21,5 MS | 7,15 | 21,4 | 0,32 | 80 |
| 1 MSA | 0,4 Hexandiol-1,6 | 17,85 MAS<br>53,50 AS | 21,5 MS | 7,15 | 22,9 | 0,15 | 76 |

1) MAS = Methacrylsäure
2) AS = Acrylsäure
3) HPN = siehe Tabelle 2
4) MS = Maleinsäure

Beispiel 4

a) Herstellung der Comonomeren A und B (Komponente e)

In einem 1 l-fassenden Reaktor aus Glas, der mit einem Rührer, Kühler und einem Zulaufgefäß ausgestattet ist, wird eine Lösung aus 1,5 Mol (147 g) Maleinsäureanhydrid in 350 g Dimethylformamid vorgelegt. Zu dieser Lösung gibt man jeweils bei 40°C über einen Zeitraum von 1,5 Stunden eine Lösung von 1 Mol des in Tabelle 4 jeweils angegebenen Diamins, das in 150 g Dimethylformamid gelöst ist. Die Reaktionstemperatur wird bei 60°C gehalten. Nach Beendigung der Zugabe des Diamins wird die entstehende Suspension noch 1 Stunde bei 60°C gerührt und anschließend eingeengt und der Feststoff abfiltriert. Der Filterkuchen wird anschließend mit Aceton kurz aufgekocht, das Aceton abgesaugt und der Filterkuchen getrocknet. Die so erhältlichen Comonomeren A bzw. B sind in heißem Wasser löslich. Sie haben die oben in Formel (II) angegebene Struktur. Die Ausbeuten an Verbindungen dar Formel (II) betragen zwischen 72 und 91 %.

b) Copolymerisation

In einem 2 l-fassenden Glasreaktor, der mit Rührer, Thermometer, Stickstoffeinleitung, Kühler und 2 Zulaufgefäßen ausgestattet ist, werden jeweils 49 g (0,5 Mol) Maleinsäureanhydrid, 0,5 Mol der gemäß a) hergestellten Comonomeren A bzw. B vorgelegt, mit 300 ml Wasser versetzt und unter Stickstoffatomosphäre und Rühren auf eine Temperatur von 90°C erwärmt. Die Copolymerisation wird in der Weise durchgefürht, daß man zu der Vorlage unter Rühren innerhalb von 5 Stunden 1075 g (4 Mol) einer 35 %igen wäßrigen Natriumacrylatlösung und über einen Zeitraum von 6 Stunden 33 g 2,2′-Azobis(2-amidinopropan)-dihydrochlorid gelöst in 170 ml Wasser bei 90°C unter Stickstoffatmosphäre zutropft. Man erhält eine viskose, gelb-braune Lösung, die noch 1 Stunde nach Beendigung der Initiatorzugabe bei einer Temperatur von 90°C nachpolymerisiert wird und nach dem Abkühlen auf 30°C mit 25 %iger wäßriger Natronlauge auf einen pH-Wert von 6 eingestellt wird. Die Einsatzstoffe, die bei der Polymerisation eingesetzten Stoffe und die K-Werte der Copolymerisate, deren Restgehalt an nicht polymerisierter Maleinsäure sowie die Daten zur biologischen Abbaukeit sind in Tabelle 4 angegeben.

Tabelle 4

| Comonomer | Acrylsäure Komponente (a) [Mol%] | Maleinsäure Komponente (b) [Mol%] | ... Mol% Comonomer | K-Wert | Copolymerisat Restgehalt an Maleinsäure [Gew.%] | Biologische Abbaubarkeit [%] |
|---|---|---|---|---|---|---|
| A[1)] | 80 | 10 | 10 A | 43,0 | 0,19 | 35 |
| B[2)] | 80 | 10 | 10 B | 40,1 | 0,21 | 38 |

1) A = $HOOC-CH=CH-CO-NH-CH_2-CH_2-NH-CO-CH=CH-COOH$

2) B = $HOOC-CH=CH-CO-NH-CH_2-(CH_2)_4-CH_2-NH-CO-CH=CH-COOH$

Beispiel 5

In einem 2 l-fassenden Glasreaktor, der mit Rührer, Thermometer, Stickstoffeinleitung und 3 Zulaufgefäßen ausgestattet ist, von denen 1 Zulaufgefäß beheizbar und mit einem Rührer versehen ist, werden 98 g (1

Mol) Maleinsäureanhydrid in 500 ml 4molarer wäßriger Natronlauge gelöst und auf 90 °C erhitzt. Gleichzeitig werden in dem beheizbaren Zulaufgefäß 98 g (1 Mol) Maleinsäureanhydrid auf 80 °C erwärmt und über einen Zeitraum von 2 Stunden mit 0,4 Mol Serin versetzt. Anschließend wird das überschüssige Maleinsäureanhydrid durch Zugabe von 300 ml Wasser hydrolysiert und das entstandene Comonomer (Komponente e) zusammen mit der bei der Hydrolyse gebildeten Maleinsäure in dem zugesetzten Wasser gelöst.

Die Copolymerisation wird in der Weise durchgeführt, daß man über einen Zeitraum von 5 Stunden 282 g (3 Mol) Natriumacrylat, gelöst in 500 ml Wasser, und die das Comonomer und Maleinsäure enthaltende wäßrige Lösung sowie über einen Zeitraum von 6 Stunden 90 g 30 %iges Wasserstoffperoxid, gelöst in 100 ml Wasser, unter Stickstoffspülung zu dem auf 90 °C erwärmten Reaktorinhalt zutropft. Die der Copolymerisation unterworfene Monomermischung besteht aus 65,2 Mol% Acrylsäure, 26,1 Mol% Maleinsäure und 8,7 Mol% des Comonomers aus Maleinsäureanhydrid und Serin. Man erhält eine viskose Lösung, die noch 1 Stunde bei 95 °C nachpolymerisiert und nach dem Abkühlen auf 35 °C mit 25 %iger wäßriger Natronlauge auf einen pH-Wert von 6,5 eingestellt wird. Das Copolymerisat hat einen K-Wert von 33 und enthält 0,19 Gew.% nicht polymerisierter Maleinsäure.

Wiederholt man das Beispiel 5 mit der einzigen Ausnahme, daß man anstelle des Serins 0,4 Mol Lysin einsetzt, so wird ebenfalls eine Monomermischung aus 65,2 Mol% Acrylsäure, 26,1 Mol% Maleinsäure und 8,7 Mol% eines Comonomers (Umsetzungsprodukt aus Maleinsäureanhydrid und Lysin) der Copolymerisation unterworfen. Man erhält dabei ein Copolymerisat mit einem K-Wert von 30,1, das 0,21 Gew.% an nicht polymerisierter Maleinsäure enthält.

Beispiel 6

In einem 2 l-fassenden Glasreaktor, der mit Rührer, Thermometer, Stickstoffeinleitung und 3 Zulaufgefäßen ausgestattet ist, weren 98 g (1 Mol) Maleinsäureanhydrid in 500 ml 4molarer wäßriger Natronlauge gelöst und auf 90 °C erhitzt. Von den 3 Zulaufgefäßen ist 1 Zulaufegefäß beheizbar und mit einem Rührer ausgestattet. In diesem Zulaufgefäß erhitzt man unter Rühren 98 g (1 Mol) Maleinsäureanhydrid, 0,2 g Natriumacetat und 19,8 (0,1 Mol) Glucosemonohydrat, 2,5 Stunden auf eine Temperatur von 120 °C. Der Umsatz an Maleinsäureanhydrid bei der Veresterung beträgt nach dieser Zeit 50 %. Die dabei entstandene Schmelze wird nach dem Abkühlen in 72 g (1 Mol) Acrylsäure gelöst.

Zur Polymerisation werden dann, gleichbeginnend über einen Zeitraum von 5 Stunden 188 g (2 Mol) Natriumacrylat, gelöst in 350 ml Wasser, und die Lösung des Comonomers aus MSA und Glukose zusammen mit dem überschüssigen Maleinsäureanhydrid in Acrylsäure, und über einen Zeitraum von 6 Stunden 90 g 30 %iges Wasserstoffperoxid, gelöst in 100 ml Wasser, zu der auf 90 °C erhitzten Vorlage unter Stickstoffspülung zutropft. Die viskose Lösung wird 1 Stunde nachpolymerisiert und nach dem Abkühlen mit 25 %iger Natronlauge auf einen pH-Wert von 6,5 eingestellt. Das Copolymerisat hat einen K-Wert von 35,7 und enthält 0,13 Gew.% an nicht einpolymerisierter Maleinsäure. Die biologische Abbaubarkeit beträgt 62 %.

Beispiel 7

In einem 2 l-fassenden Glasreaktor, der mit Rührer, Thermometer, Stickstoffeinleitung und 2 Zulaufgefäßen ausgestattet ist, werden 147 g (1,5 Mol) Maleinsäureanhydrid in 500 ml 6molarer wäßriger Natronlauge gelöst und auf 90 °C erhitzt.

Zur Polymerisation werden dann über einen Zeitraum von 5 Stunden 40,66 g (0,19 Mol) Mono-2-hydroxyethylacrylatmaleinat (Comonomer, erhältlich aus Maleinsäureanhydrid und 2-Hydroxyethylacrylat im Molverhältnis 1:1), gelöst in 162 g (2,25 Mol) Acrylsäure und gleichbeginnend über einen Zeitraum von 6 Stunden 71,4 g 30 %iges Wasserstoffperoxid, gelöst in 28 g Wasser, zu der auf 90 °C erhitzten Vorlage unter Stickstoffspülung zugetropft. Das Monomerengemisch, das der Copolymerisation unterworfen wird, enthält 4,8 Mol% des Comonomers aus MSA und 2-Hydroxyethylacrylat, 38,1 Mol% Maleinsäure und 57,1 Mol% Acrylsäure. Die viskose Lösung wird 1 Stunde bie 95 °C nachpolymerisiert und nach dem Abkühlen auf 28 °C mit 25 %iger wäßriger Natronlauge auf einen pH-Wert von 6,5 eingestellt. Das Copolymerisat hat einen K-Wert von 42,2 und enthält 0,19 Gew.% nicht polymerisierte Maleinsäure.

Beispiele 8 bis 12

In einem 4 l-fassenden Glasreaktor, der ausgestattet ist mit Rührer, Thermometer, Stickstoffeinleitung und sechs Zulaufgefäßen, von denen eines heiz- und rührbar ist, weren 1000 ml Wasser vorgelegt und unter Stickstoffspülung auf 90 °C erwärmt. Im heizbaren Zulaufgefäß IV werden bei 80 °C n Mol des in der

Tabelle angegebenen Comonomeren e) zusammen mit m Mol Maleinsäureanhydrid (MSA) geschmolzen. Die übrigen Zulaufgefäße werden wie folgt befüllt:

Zulauf I: Lösung von p Mol des in der Tabelle angegebenen Comonomeren f) in 2 Mol Acrylsäure
Zulauf II: 2 Mol Acrylsäure
Zulauf III: Lösung von q Gew.% Regler in 100 ml Wasser
Zulauf V: 720 g 25 %ige wäßrige Natronlauge
Zulauf VI: 25 g Natriumpersulfat gelöst in 500 ml 30 %igem $H_2O_2$

Bei 90 °C werden nun gleichbeginnend die Zuläufe I und III über einen Zeitraum von 2 h, Zulauf IV innerhalb von 4 h und Zulauf VI über einen Zeitraum von 5 1/2 h zudosiert. Zwei Stunden nach Beginn der Monomerenzugabe wird Zulauf II über einen Zeitraum von 2 h und Zulauf V über einen Zeitraum von 3 h zugetropft.

Anschließend läßt man 1 h nachreagieren und stellt den Ansatz nach dem Abkühlen auf pH 7.

Die in den Bespielen eingesetzten Mengen an Comonomer e) und f), die Mengen Acrylsäure (Comonomer a)), Maleinsäureanhydrid und Comonomer e) sowie die verwendeten Regler (Gew.%) und die K-Werte der erhaltenen Copolymerisate sind in der Tabelle aufgeführt.

Tabelle

| Beispiel Nr. | Comonomer a) [Mol]; [Mol%] | Comonomer b) m[Mol]; [Mol%] | Comonomer e) n[Mol]; [Mol%] | Comonomer f) p[Mol]; [Mol%] | Regler g [Gew.%] | K-Wert |
|---|---|---|---|---|---|---|
| 8 | Acrylsäure 4; 86,0 | MSA 0,15; 3,2 | Ethylenglykol-dimaleinat 0,4; 8,6 | $PEG_{400}$-Diacrylat 0,1; 2,2 | Mercapto-ethanol 5 | 38,8 |
| 9 | Acrylsäure 4; 85,1 | MSA 0,1; 2,1 | Neopentylglykol-dimaleinat 0,4; 8,6 | Ethylenglykol-diacrylat 0,1; 2,2 | Hydroxylammo-niumsulfat 5 | 36,2 |
| 10 | Acrylsäure 4; 83,3 | MSA 0,2; 4,2 | $PEG_{300}$-Dimaleinat 0,4; 8,3 | Glycerin-diacrylat 0,2; 4,2 | Mercapto-ethanol 10 | 25,4 |
| 11 | Acrylsäure 4; 80 | MSA 0,3; 6 | Tetramethylen-glykoldimaleinat 0,35; 7 | Tetraethylengly-koldiacrylat 0,2; 0,35 | Mercapto-ethanol 3 | 30,6 |
| 12 | Acrylsäure 4; 82,5 | MSA 0,45; 9,3 | Diethylenglykol-dimaleinat 0,2; 4,1 | $PEG_{1500}$-Diacrylat 0,2; 4,1 | Mercapto-ethanol 8 | 28,2 |

Die biologische Abbaubarkeit der in der Tabelle beschriebenen Copolymerisate wurde durch Bakterienwachstumsversuche nachgewiesen. Hierfür wurde auf festen Nährböden ein Anreicherungsmedium hergestellt und mit 18 g/l Agar verfestigt. Das Anreicherungsmedium hatte folgende Zusammensetzung:

| | |
|---|---|
| Dinatriumhydrogenphosphat mit 2 Wasser | 7 g/l |
| Kaliumdihydrogenphosphat | 3 g/l |
| Natriumchlorid | 0,5 g/l |
| Ammoniumchlorid | 1,0 g/l |
| Lösung von Spurenelementen | 2,5 ml/l pH 7.0 |
| (hergestellt nach T. Bauchop und S.R. Elsden, J.gen.Mikrobiol. 23, 457-469 (1960). | |

Die zu prüfenden Copolymerisate wurden den Nährmedien in Konzentrationen von 10 g/l zugegeben.

Erdproben wurden entweder in Flüssigmedium gegeben und dort 7 Tage bei 30 °C geschüttelt oder als wäßrige Suspension direkt auf feste Nährböden gebracht und ebenfalls bei 30 °C inkubiert. Die Anreicherungskulturen in Flüssigmedium wurden nach 7 Tagen auf feste Nährböden übertragen. Von diesen Platten wurden gut wachsende Kolonien abgeimpft und im Vereinzelungsausstrich auf Einheitlichkeit geprüft.

Auf diese Weise wurden Bakterienreinkulturen isoliert, die auf allen in Tabelle angegebenen Copolymerisaten eindeutig Wachstum zeigen.

Wurden die oben beschriebenen Bakterienwachstumsversuche zum Vergleich mit einem Copolymerisat aus 30 Gew.% Maleinsäure und 70 Gew.% Acrylsäure (K-Wert 60) durchgeführt, so konnte kein Bakterienwachstum nachgewiesen werden.

## Patentansprüche

**1.** Wasserlösliche Copolymerisate auf Basis von monoethylenisch ungesättigten Carbonsäuren mit 3 bis 6 C-Atomen, dadurch gekennzeichnet, daß die Copolymerisate einen K-Wert von 8 bis 100 (bestimmt am Na-Salz nach H. Fikentscher in wäßriger Lösung bei 25 °C, einem pH-Wert von 7 und einer Polymerkonzentration des Na-Salzes von 1 Gew.%) haben und

a) 99 bis 15 Mol% wenigstens einer monoethylenisch ungesättigten $C_3$- bis $C_6$-Monocarbonsäure,

b) 0,5 bis 84,5 Mol% wenigstens einer monoethylenisch ungesättigten $C_4$- bis $C_6$-Dicarbonsäure,

c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren,

d) 0 bis 30 Mol% anderen, mit a), b) und c) copolymerisierbaren, wasserlöslichen, monoethylenisch ungesättigten Monomeren, mit Ausnahme von Estern der Acrylsäure und Methacrylsäure mit Polyalkylenglykolen, und

e) 0,5 bis 15 Mol% Wenigstens eines mindestens zwei ethylenisch ungesättigte, nicht konjugierte Doppelbindungen aufweisenden Comonomers, das mindestens eine -CO-OX-Gruppe hat, in der X ein Wasserstoff-, ein Alkalimetall- oder Erdalkalimetalläquivalent oder eine Ammoniumgruppe bedeutet,

mit der Maßgabe einpolymerisiert enthalten, daß die Summe der Angaben in Mol% a) bis e) immer 100 beträgt.

**2.** Wasserlösliche Copolymerisate nach Anspruch 1, dadurch gekennzeichnet, daß sie

a) mindestens 15 Mol% wenigstens einer monoethylenisch ungesättigten $C_3$- bis $C_6$-Monocarbonsäure,

b) 0,5 bis 84,5 Mol% wenigstens einer monoethylenisch ungesättigten $C_4$- bis $C_6$-Dicarbonsäure,

c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren,

d) 0 bis 30 Mol% anderen, mit a), b) und c) copolymerisierbaren, wasserlöslichen, monoethylenisch ungesättigten Monomeren, mit Ausnahme von Estern der Acrylsäure und Methacrylsäure mit Polyalkylenglykolen,

e) 0,5 bis 15 Mol% wenigstens eines mindestens zwei ethylenisch ungesättigten nicht konjugierte Doppelbindungen aufweisenden Comonomers, das mindestens eine -CO-OX-Gruppe hat, in der X ein Wassertoff-, ein Alkalimetall- oder Erdalkalimetalläquivalent oder eine Ammoniumgruppe bedeutet und

f) 0,05 bis 10 Mol% wenigstens eines von e) verschiedenen Comonomers, das mindestens zwei ethylenisch ungesättigte, nicht konjugierte Doppelbindungen aufweist

mit der Maßgabe einpolymerisiert enthalten, daß die Summe der Angaben in Mol% a) bis f) immer 100 beträgt.

3. Wasserlösliche Copolymerisate nach den Ansprüchen 1 oder 2, dadurch gekennzeichnet, daß das einpolymerisierte Comonomer (e) erhältlich ist durch Umsetzung von
   e1) Maleinsäureanhydrid, Itaconsäureanhydrid, Citraconsäureanhydrid oder deren Gemischen mit
   e2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyaminen, Polyalkylenpolyaminen, Polyethyleniminen, Aminoalkoholen, Hydroxyamino- oder -diaminocarbonsäuren, wasserlöslichen Copolymerisaten aus Ethylenoxid und Kohlendioxid, Polyvinylalkohol eines Molekulargewichts bis 10.000, Allylalkohol, Allylamin, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen.

4. Verfahren zur Herstellung von wasserlöslichen Copolymerisaten nach Anspruch 1 oder 2 durch Copolymerisieren von Monomergemischen aus
   a) 99 bis 15 Mol% einer monoethylenisch ungesättigten $C_3$- bis $C_6$-Monocarbonsäure,
   b) 0,5 bis 84,5 Mol% einer monoethylenisch ungesättigten $C_4$- bis $C_6$-Dicarbonsäure,
   c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren,
   d) 0 bis 30 Mol% anderen, mit a), b) und c) copolymerisierbaren, wasserlöslichen, monoethylenisch ungesättigten Monomeren, mit Ausnahme von Estern der Acrylsäure und Methacrylsäure mit Polyalkylenglykolen
   
   in wäßriger Lösung in Gegenwart von Polymerisationsinitiatoren, dadurch gekennzeichnet, daß die Copolymerisation in Anwesenheit von
   e) 0,5 bis 15 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet,
   
   mit der Maßgabe durchgeführt wird, daß die Summe der Angaben in Mol% a) bis e) immer 100 beträgt.

5. Verfahren zur Herstellung von wasserlöslichen Copolymerisaten nach Anspruch 2 durch Copolymerisieren von Monomergemischen aus
   a) mindestens 15 Mol% einer monoethylenisch ungesättigten $C_3$- bis $C_6$-Monocarbonsäure,
   b) 0,5 bis 84,5 Mol% einer monoethylenisch ungesättigten $C_4$- bis $C_6$-Dicarbonsäure,
   c) 0 bis 20 Mol% eines oder mehrerer Hvdroxyalkylester mit 2 bis 6 C-Atomen in der Hydroxyalkylgruppe von monoethylenisch ungesättigten $C_3$- bis $C_6$-Carbonsäuren,
   d) 0 bis 30 Mol% anderen, mit a), b) und c) copolymerisierbaren, wasserlöslichen, monoethylenisch ungesättigten Monomeren, mit Ausnahme von Estern der Acrylsäure und Methacrylsäure mit Polyalkylenglykolen
   
   in wäßriger Lösung in Gegenwart von Polymerisationsinitiatoren und Reglern, dadurch gekennzeichnet, daß die Copolymerisation in Anwesenheit von
   e) 0,5 bis 15 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet und
   f) 0,05 bis 10 Mol% wenigstens eines von e) verschiedenen Comonomers, das mindestens zwei ethylenisch ungesättigte, nicht konjugierte Doppelbindungen aufweist
   
   mit der Maßgabe durchgeführt wird, daß die Summe der Angaben in Mol% a) bis f) immer 100 beträgt.

6. Verfahren nach Anspruch 4, dadurch gekennzeichnet, daß man zunächst das Comonomer (e) herstellt durch Umsetzung von
   e1) Maleinsäureanhydrid, Itaconsäureanhydrid, Citraconsäureanhydrid oder deren Gemischen mit
   e2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Diaminen, Polyalkylenpolyaminen, Polyethyleniminen, Aminoalkoholen, Lysin, Serin, wasserlöslichen Copolymerisaten aus Ethylenoxid und Kohlendioxid, Polyvinylalkohol eines Molekulargewichts bis 10.000, Allylalkohol, Allylamin, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis

$C_6$-Hydroxycarbonsäuren oder deren Mischungen
bei Temperaturen von 50 bis 200 °C und es dann in wäßriger Lösung mit den Monomeren a) bis d) bei Temperaturen von 20 bis 200 °C copolymerisiert.

**7.** Verfahren nach Anspruch 6, dadurch gekennzeichnet, daß man den Umsetzungsansatz aus den Komponenten (e1) und (e2) in Form seiner Schmelze oder ihrer gegebenenfalls teilweise oder vollständig neutralisierten, wäßrigen Lösung dem Polymerisationsansatz zuführt.

**8.** Verfahren nach den Ansprüchen 4 oder 5, dadurch gekennzeichnet, daß das Comonomer e) in einer monoethylenisch ungesättigten Carbonsäure gemäß (a) oder einer gegebenenfalls teilweise oder vollständig neutralisierten wäßrigen Lösung derselben gelöst und in Form dieser Lösung der Copolymerisation mit den übrigen Comonomeren unterworfen wird.

**9.** Verfahren nach mindestens einem der Ansprüche 4 bis 8, dadurch gekennzeichnet, daß man Monomergemische aus
a) Acrylsäure und/oder Methacrylsäure und
b) Maleinsäure und/oder Itaconsäure mit
e) einem Comonomer aus e1) Maleinsäureanhydrid und e2) Ethylenglykol, Polyethylenglykol eines Molekulargewichts bis 2.000, Glycerin, Polyglycerinen eines Molekulargewichts bis 2.000, Pentaerythrit, Monosacchariden, Neopentylglykol, $\alpha,\omega$-Diaminen mit 2 bis 6 C-Atomen, $\alpha,\omega$-Diolen mit 3 bis 6 C-Atomen, Hydroxypivalinsäureneopentylglykolmonoester
der Copolymerisation unterwirft.

**10.** Verfahren nach mindestens einem der Ansprüche 4 bis 8, dadurch gekennzeichent, daß man Monomerengemische aus
a) 99 bis 15 Mol% Acrylsäure und/oder Methacrylsäure und
b) 0,5 bis 84,5 Mol% Maleinsäure und/oder Itaconsäure und
c) 0 bis 20 Mol% Hydroxypropylacrylaten, Hydroxypropylmethacrylaten, Hydroxyethylacrylat, Hydroxyethylmethacrylat, Hydroxybutylacrylaten, Hydroxybutylmethacrylaten oder deren Mischungen und
e) 0,5 bis 15 Mol% eines Comonomers aus e1) Maleinsäureanhydrid und e2) Ethylenglykol, Polyethylenglykol eines Molekulargewichts bis 2.000, Glycerin, Polyglycerinen eines Molekulargewichts bis 2.000, Pentaerythrit, Monosacchariden, Neopentylglykol, $\alpha,\omega$-Diaminen mit 2 bis 6 C-Atomen, $\alpha,\omega$-Diolen mit 3 bis 6 C-Atomen, Hydroxypivalinsäureneopentylglykolester oder deren Mischungen
der Copolymerisation unterwirft.

**11.** Verfahren nach mindestens einem der Ansprüche 4 bis 10, dadurch gekennzeichnet, daß der pH-Wert der wäßrigen Lösung während der Copolymerisation 2 bis 9 beträgt.

**12.** Verfahren nach mindestens einem der Ansprüche 4 bis 9, dadurch gekennzeichnet, daß man Monomerengemische aus
a) Acrylsäure und/oder Methacrylsäure,
b) Maleinsäure und
e) einer Verbindung der Formel

$$XOOC-CH=CH-CO-O-\left[CH_2-CH_2-O\right]_n-CO-CH=CH-COOX \qquad (I),$$

in der
X = H, Alkalimetall oder eine Ammoniumgruppe und
n = 1 bis 120 bedeutet,
der Copolymerisation unterwirft.

**13.** Verfahren nach mindestens einem der Ansprüche 4 bis 9, dadurch gekennzeichnet, daß man Monomerengemische aus

a) Acrylsäure und/oder Methacrylsäure,
b) Maleinsäure und
e) einer Verbindung der Formel

$$XOOC\text{-}CH=CH\text{-}CO\text{-}NH\text{-}CH_2\text{-}(CH_2)_n\text{-}CH_2\text{-}NH\text{-}CO\text{-}CH=CH\text{-}COOX \quad (II),$$

in der
X = H, Alkalimetall oder eine Ammoniumgruppe und
n = 0 bis 4 bedeutet,

der Copolymerisation unterwirft.

**14.** Verfahren nach den Anprüchen 12 oder 13, dadurch gekennzeichnet, daß die Monomeren a), b) und e) jeweils in partiell mit Alkalimetall- oder Ammoniumbasen neutralisierter Form copolymerisiert werden, wobei der Neutralisationsgrad 40 bis 90 Mol% beträgt.

**15.** Verwendung der wasserlöslichen Copolymerisate nach Anspruch 1 oder 2 als Beschichtungsmittel für Saatgut.

**Claims**

**1.** A water-soluble copolymer based on monoethylenically unsaturated carboxylic acids of 3 to 6 carbon atoms, wherein the copolymer has a K value of from 8 to 100 (determined on the Na salt according to H. Fikentscher in aqueous solution at 25 °C, a pH of 7 and polymer concentration of the Na salt of 1% by weight) and contains, as copolymerized units,

a) from 99 to 15 mol % of one or more monoethylenically unsaturated $C_3$-$C_6$-monocarboxylic acids,
b) from 0.5 to 84.5 mol % of one or more monoethylenically unsaturated $C_4$-$C_6$-dicarboxylic acids,
c) from 0 to 20 mol % of one or more hydroxyalkyl esters, where hydroxyalkyl is of 2 to 6 carbon atoms, of monoethylenically unsaturated $C_3$-$C_6$-carboxylic acids,
d) from 0 to 30 mol % of other water-soluble, monoethylenically unsaturated monomers copolymerizable with a), b) and c), with the exception of esters of acrylic acid and methacrylic acid with polyalkylene glycols,
e) from 0.5 to 15 mol % of one or more comonomers which possess two or more ethylenically unsaturated, nonconjugated double bonds and one or more -CO-OX groups in which X is hydrogen, one equivalent of an alkali metal or alkaline earth metal or an ammonium group,

with the proviso that the sum of the mol % a) to e) is always 100.

**2.** A water-soluble copolymer as claimed in claim 1, which contains, as copolymerized units,

a) not less than 15 mol % of one or more monoethylenically unsaturated $C_3$-$C_6$-monocarboxylic acids,
b) from 0.5 to 84.5 mol % of one or more monoethylenically unsaturated $C_4$-$C_6$-dicarboxylic acids,
c) from 0 to 20 mol % of one or more hydroxyalkyl esters, where hydroxyalkyl is of 2 to 6 carbon atoms, of monoethylenically unsaturated $C_3$-$C_6$-carboxylic acids,
d) from 0 to 30 mol % of other water-soluble, monoethylenically unsaturated monomers copolymerizable with a), b) and c), with the exception of esters of acrylic acid and methacrylic acid with polyalkylene glycols,
e) from 0.5 to 15 mol % of one or more comonomers which possess two or more ethylenically unsaturated, nonconjugated double bonds and one or more -CO-OX groups in which X is hydrogen, one equivalent of an alkali metal or alkaline earth metal or an ammonium group, and
f) from 0.05 to 10 mol % of one or more comonomers which differ from e) and have two or more ethylenically unsaturated, nonconjugated double bonds,

with the proviso that the sum of the mol % a) to f) is always 100.

**3.** A water-soluble copolymer as claimed in claim 1 or 2, wherein the copolymerized comonomer (e) is obtainable by reacting

e1) maleic anhydride, itaconic anhydride or citraconic anhydride, or a mixture of these with
e2) polyhydric alcohols of 2 to 6 carbon atoms, water-soluble or water-insoluble polyalkylene glycols having a molecular weight of up to about 400, water-soluble polyalkylene glycols having a molecular weight from above about 400 to 10,000, polyglycerols having a molecular weight of up to 2,000,

polyamines, polyalkylenepolyamines, polyethyleneimines, aminoalcohols, hydroxyamino- or -diaminocarboxylic acids, water-soluble copolymers of ethylene oxide and carbon dioxide, polyvinyl alcohol having a molecular weight of up to 10,000, allyl alcohol, allylamine, hydroxyalkyl esters, where hydroxyalkyl is of 2 to 6 carbon atoms, of monoethylenically unsaturated $C_3$-$C_6$-carboxylic acids or of saturated $C_3$-$C_6$-hydroxycarboxylic acids or mixtures of these.

**4.** A process for the preparation of a water-soluble copolymer as claimed in claim 1 or 2 by copolymerization of a monomer mixture of

a) from 99 to 15 mol % of one or more monoethylenically unsaturated $C_3$-$C_6$-monocarboxylic acids,
b) from 0.5 to 84.5 mol % of one or more monoethylenically unsaturated $C_4$-$C_6$-dicarboxylic acids,
c) from 0 to 20 mol % of one or more hydroxyalkyl esters, where hydroxyalkyl is of 2 to 6 carbon atoms, of monoethylenically unsaturated $C_3$-$C_6$-carboxylic acids, and
d) from 0 to 30 mol % of other water-soluble, monoethylenically unsaturated monomers copolymerizable with a), b) and c), with the exception of esters of acrylic acid and methacrylic acid with polyalkylene glycols,

in aqueous solution in the presence of a polymerization initiator, wherein the copolymerization is carried out in the presence of

e) from 0.5 to 15 mol % of one or more comonomers which possess two or more ethylenically unsaturated, nonconjugated double bonds and one or more -CO-OX groups in which X is hydrogen, one equivalent of an alkali metal or alkaline earth metal or an ammonium group,

with the proviso that the sum of the mol % a) to e) is always 100.

**5.** A process for the preparation of a water-soluble copolymer as claimed in claim 2, by copolymerization of a monomer mixture of

a) not less than 15 mol % of one or more monoethylenically unsaturated $C_3$-$C_6$-dicarboxylic acids,
b) from 0.5 to 84.5 mol % of one or more monoethylenically unsaturated $C_4$-$C_6$-dicarboxylic acids,
c) from 0 to 20 mol % of one or more hydroxyalkyl esters, where hydroxyalkyl is of 2 to 6 carbon atoms, of monoethylenically unsaturated $C_3$-$C_6$-carboxylic acids, and
d) from 0 to 30 mol % of other water-soluble, monoethylenically unsaturated monomers copolymerizable with a), b) and c), with the exception of esters of acrylic acid and methacrylic acid with polyalkylene glycols,

in aqueous solution in the presence of a polymerization initiator and a regulator, wherein the copolymerization is carried out in the presence of

e) from 0.5 to 15 mol % of one or more comonomers which possess two or more ethylenically unsaturated, nonconjugated double bonds and have one or more -CO-OX groups in which X is hydrogen, one equivalent of an alkali metal or alkaline earth metal or an ammonium group, and
f) from 0.05 to 10 mol % of one or more comonomers which differ from e) and have two or more ethylenically unsaturated, nonconjugated double bonds,

with the proviso that the sum of the mol % a) to f) is always 100.

**6.** A process as claimed in claim 4, wherein the comonomer (e) is first prepared by reacting

e1) maleic anhydride, itaconic anhydride or citraconic anhydride, or a mixture of these, with
e2) polyhydric alcohols of 2 to 6 carbon atoms, water-soluble or water-insoluble polyalkylene glycols having a molecular weight of up to about 400, water-soluble polyalkylene glycols having a molecular weight of from above about 400 to 10,000, polyglycerols having a molecular weight of up to 2,000, diamines, polyalkylenepolyamines, polyethyleneimines, aminoalcohols, lysine, serine, water-soluble copolymers of ethylene oxide and carbon dioxide, polyvinyl alcohol having a molecular weight of up to 10,000, allyl alcohol, allylamine, hydroxyalkyl esters, where hydroxyalkyl is of 2 to 6 carbon atoms, of monoethylenically unsaturated $C_3$-$C_6$-carboxylic acids or of saturated $C_3$-$C_6$-hydroxycarboxylic acids or mixtures of these,

at from 50 to 200 °C, and then copolymerizing the product in aqueous solution with the monomers a) to d) at from 20 to 200 °C.

**7.** A process as claimed in claim 6, wherein the reaction mixture of components (e1) and (e2) is fed to the polymerization mixture in the form of its melt or its partially or completely neutralized, aqueous solution.

**8.** A process as claimed in claim 4 or 5, wherein the comonomer (e) is dissolved in a monoethylenically unsaturated carboxylic acid (a) or in a partially or completely neutralized aqueous solution of the said

acid and is subjected in the form of this solution to copolymerization with the other comonomers.

**9.** A process as claimed in one or more of claims 4 to 8, wherein a monomer mixture of
a) acrylic acid and/or methacrylic acid and
b) maleic acid and/or itaconic acid with
e) a comonomer of e1) maleic anhydride and e2) ethylene glycol, polyethylene glycol having a molecular weight of up to 2,000, glycerol, polyglycerols having a molecular weight of up to 2,000, pentaerythritol, monosaccharides, neopentylglycol, $\alpha,\omega$-diamines of 2 to 6 carbon atoms, $\alpha,\omega$-diols of 3 to 6 carbon atoms or neopentylglycol monohydroxypivalate
is subjected to the copolymerization.

**10.** A process as claimed in one or more of claims 4 to 8, wherein a monomer mixture of
a) from 99 to 15 mol % of acrylic acid and/or methacrylic acid,
b) from 0.5 to 84.5 mol % of maleic acid and/or itaconic acid,
c) from 0 to 20 mol % of hydroxypropyl acrylates, hydroxypropyl methacrylates, hydroxyethyl acrylate, hydroxyethyl methacrylate, hydroxybutyl acrylates, hydroxybutyl methacrylates or a mixture of these and
e) from 0.5 to 15 mol % of a comonomer of e1) maleic anhydride and e2) ethylene glycol, polyethylene glycol having a molecular weight of up to 2,000, glycerol, polyglycerols having a molecular weight of up to 2,000, pentaerythritol, monosaccharides, neopentylglycol, $\alpha,\omega$-diamines of 2 to 6 carbon atoms, $\alpha,\omega$-diols of 3 to 6 carbon atoms or neopentylglycol hydroxypivalate or a mixture of these,
is subjected to the copolymerization.

**11.** A process as claimed in one or more of claims 4 to 10, wherein the pH of the aqueous solution during the copolymerization is from 2 to 9.

**12.** A process as claimed in one or more of claims 4 to 9, wherein a monomer mixture of
a) acrylic acid and/or methacrylic acid,
b) maleic acid and
e) a compound of the formula

$$XOOC-CH=CH-CO-O-\left[CH_2-CH_2-O\right]_n-CO-CH=CH-COOX \qquad (I)$$

where X is H, an alkali metal or an ammonium group and n is from 1 to 120,
is subjected to the copolymerization.

**13.** A process as claimed in one or more of claims 4 to 9, wherein a monomer mixture of
a) acrylic acid and/or methacrylic acid,
b) maleic acid and
e) a compound of the formula

$$XOOC\text{-}CH = CH\text{-}CO\text{-}NH\text{-}CH_2\text{-}(CH_2)_n\text{-}CH_2\text{-}NH\text{-}CO\text{-}CH = CH\text{-}COOX \qquad (II)$$

where X is H, an alkali metal or an ammonium group and n is from 0 to 4,
is subjected to the copolymerization.

**14.** A process as claimed in claim 12 or 13, wherein the monomers a), b) and e) are each copolymerized in a form partially neutralized with an alkali metal or ammonium base, the degree of neutralization being from 40 to 90 mol %.

**15.** Use of a water-soluble copolymer as claimed in claim 1 or 2 as a coating composition for seed.

## Revendications

1. Copolymères solubles dans l'eau, à base d'acides carboxyliques à insaturation monoéthylénique et comportant de 3 à 6 atomes de carbone, caractérisés en ce que les copolymères possèdent une valeur K de 8 à 100 (déterminée sur le sel de sodium, selon H. Fikentscher, en solution aqueuse, à 25 °C, un pH de 7 et une concentration en polymère du sel de sodium de 1%) et comportent de
   a) 99 à 15% molaires d'au moins un acide monocarboxylique en $C_3$ à $C_6$, à insaturation monoéthylénique,
   b) 0,5 à 84,5% molaires d'au moins un acide dicarboxylique en $C_4$ à $C_6$, à insaturation monoéthylénique,
   c) 0 à 20% molaires d'un ou plusieurs esters hydroxyalkyliques dont le radical hydroxyalkyle comporte de 2 à 6 atomes de carbone d'acides carboxyliques en $C_3$ à $C_6$, à insaturation monoéthylénique,
   d) 3 à 30% molaires d'autres monomères à insaturation monoéthylénique, solubles dans l'eau, copolymérisables avec a), b) et c), à l'exclusion d'esters de l'acide acrylique et de l'acide méthacrylique avec des polyalkylèneglycols et
   e) 0 à 15% molaires d'au moins un comonomère qui présente au moins deux doubles liaisons éthyléniquement insaturées mais non conjuguées, qui comporte au moins un radical -CO-OX dans lequel X représente un équivalent d'hydrogène, de métal alcalin ou de métal alcalino-terreux, ou un groupe ammonium,

   incorporés par polymérisation, avec la condition que la somme des indications en pourcent molaires de a) à e) soit toujours égale à 100.

2. Copolymères solubles dans l'eau selon la revendication 1, caractérisés en ce qu'ils contiennent
   a) au moins 15% molaires d'au moins un acide monocarboxylique en $C_3$ à $C_6$, à insaturation monoéthylénique,
   b) 0,5 à 84,5% molaires d'au moins un acide dicarboxylique en $C_4$ à $C_6$, à insaturation monoéthylénique,
   c) 0 à 20% molaires d'un ou plusieurs esters hydroxyalkyliques dont le radical hydroxyalkyle comporte de 2 à 6 atomes de carbone d'acides carboxyliques en $C_3$ à $C_6$, à insaturation monoéthylénique,
   d) 0 à 30% molaires d'autres monomères à insaturation monoéthylénique, solubles dans l'eau, copolymérisables avec a), b) et c), à l'exclusion d'esters de l'acide acrylique et de l'acide méthacrylique avec des polyalkylèneglycols,
   e) 0,5 à 15% molaires d'au moins un comonomère présentant au moins deux doubles liaisons éthyléniquement insaturées et non conjuguées, qui comporte au moins un radical -CO-OX dans lequel X représente un équivalent d'hydrogène, de métal alcalin ou de métal alcalino-terreux, ou un radical ammonium et
   f) 0,05 à 10% molaires d'au moins un comonomère qui diffère de e) et qui présente au moins deux doubles liaisons éthyléniquement insaturées et non conjuguées,

   incorporés par polymérisation, avec la condition que les sommes des indications en pourcent molaires de a) à f) soit toujours égale à 100.

3. Copolymères solubles dans l'eau selon la revendication 1 ou la revendication 2, caractérisés en ce que le comonomère e) incorporé par polymérisation peut s'obtenir par la réaction
   e1) de l'anhydride maléique, de l'anhydride itaconique, de l'anhydride citraconique, ou de leurs mélanges avec
   e2) des alcools polyhydroxylés, présentant de 2 à 6 atomes de carbone, des polyalkylèneglycols solubles dans l'eau ou insolubles dans l'eau, d'un poids moléculaire allant jusqu'à environ 400, des polyalkylèneglycols solubles dans l'eau, d'un poids moléculaire supérieur à environ 400 et allant jusqu'à 10.000, des polyglycérines d'un poids moléculaire allant jusqu'à 2.000, des polyamines, des polyalkylènepolyamines, des polyéthylènimines, des aminoalcools, des acides hydroxyamino- ou diaminocarboxyliques, des copolymères solubles dans l'eau de l'oxyde d'éthylène et de l'anhydride carbonique, du poly(alcool vinylique) d'un poids moléculaire allant jusqu'à 10.000, de l'alcool allylique, de l'allylamine, des esters hydroxyalkyliques dont le radical hydroxyalkyle comporte de 2 à 6 atomes de carbone d'acides carboxyliques en $C_3$ à $C_6$, à insaturation monoéthylénique, ou d'acides hydroxycarboxyliques en $C_3$ à $C_6$ saturés, ou leurs mélanges.

4. Procédé de préparation de copolymères solubles dans l'eau selon la revendication 1 ou la revendication 2, par la copolymérisation de mélanges de monomères constitués de
   a) 99 à 15% molaires d'un acide monocarboxylique en $C_3$ à $C_6$, à insaturation monoéthylénique,
   b) 0,5 à 84,5% molaires d'un acide dicarboxylique en $C_4$ à $C_5$, à insaturation monoéthylénique,
   c) 0 à 20% molaires d'un ou plusieurs esters hydroxyalkyliques dont le radical hydroxyalkyle comporte de 2 à 6 atomes de carbone d'acides carboxyliques en $C_3$ à $C_6$, à insaturation monoéthylénique,
   d) 0 à 30% molaires d'autres monomères à insaturation éthylénique, solubles dans l'eau, copolymérisables avec a), b) et c), à l'exclusion d'esters de l'acide acrylique et de l'acide méthacrylique avec des polyalkylèneglycols,

   en solution aqueuse et en présence d'amorceurs de polymérisation, caractérisé en ce que l'on entreprend la copolymérisation en présence de
   e) 0,5 à 15% molaires d'au moins un comonomère présentant au moins deux doubles liaisons éthyléniquement insaturées et non conjuguées, qui comporte au moins un radical -CO-OX dans lequel X représente un équivalent d'hydrogène, de métal alcalin ou de métal alcalino-terreux ou un radical ammonium,

   avec la condition que la somme des indications en pourcent molaires de a) à e) soit toujours égale à 100.

5. Procédé de préparation de copolymères solubles dans l'eau selon la revendication 2, par la copolymérisation de mélanges de monomères constitués de
   a) au moins 15% molaires d'un acide monocarboxylique en $C_3$ à $C_6$, à insaturation monoéthylénique,
   b) 0,5 à 84,5% molaires d'un acide dicarboxylique en $C_4$ à $C_6$, à insaturation monoéthylénique,
   c) 0 à 20% molaires d'un ou plusieurs esters hydroxyalkyliques dont le radical hydroxyalkyle comporte de 2 à 6 atomes de carbone d'acides carboxyliques en $C_3$ à $C_6$, à insaturation monoéthylénique,
   d) 0 à 30% molaires d'autres monomères à insaturation monoéthylénique, solubles dans l'eau, copolymérisables avec a), b) et c), à l'exclusion d'esters de l'acide acrylique et de l'acide méthacrylique avec des polyalkylèneglycols,

   en solution aqueuse et en présence d'amorceurs de polymérisation et de régulateurs,
   caractérisé en ce que l'on entreprend la copolymérisation en présence de
   e) 0,5 à 15% molaires d'au moins un comonomère présentant au moins deux doubles liaisons éthyléniquement insaturées et non conjuguées, qui comporte au moins un radical -CO-OX dans lequel X représente un équivalent d'hydrogène, de métal alcalin ou de métal alcalino-terreux ou un radical ammonium et
   f) 0,05 à 10% molaires d'au moins un comonomère qui diffère de e) et qui présente au moins deux doubles liaisons éthyléniquement insaturées et non conjuguées,

   avec la condition que la somme des indications en pourcent molaires de a) à f) soit toujours égale à 100.

6. Procédé suivant la revendication 4, caractérisé en ce que l'on prépare d'abord le comonomère e) par la réaction de
   e1) de l'anhydride maléique, de l'anhydride itaconique, de l'anhydride citraconique, ou de leurs mélanges avec
   e2) des alcools polyhydroxylés, présentant de 2 à 6 atomes de carbone, des polyalkylèneglycols solubles dans l'eau ou insolubles dans l'eau, d'un poids moléculaire allant jusqu'à environ 400, des polyalkylèneglycols solubles dans l'eau, d'un poids moléculaire supérieur à environ 400 et allant jusqu'à 10.000, des polyglycérines d'un poids moléculaire allant jusqu'à 2.000, des polyamines, des polyalkylènepolyamines, des polyéthylènimines, des aminoalcools, des acides hydroxyamino- ou diaminocarboxyliques, des copolymères solubles dans l'eau de l'oxyde d'éthylène et de l'anhydride carbonique, du poly(alcool vinylique) d'un poids moléculaire allant jusqu'à 10.000, de l'alcool allylique, de l'allylamine, des esters hydroxyalkyliques dont le radical hydroxyalkyle comporte de 2 à 6 atomes de carbone d'acides carboxyliques en $C_3$ à $C_6$, à insaturation monoéthylénique, ou d'acides hydroxycarboxyliques en $C_3$ à $C_6$ saturés, ou leurs mélanges,

   à des températures de 50 à 200 °C et on le copolymérise ensuite à des températures de 20 à 200 °C en solution aqueuse avec les monomères a) à d).

7. Procédé suivant la revendication 6, caractérisé en ce que l'on introduit l'ensemble réactionnel constitué des composants (e1) et (e2) sous la forme de sa masse fondue ou de sa solution aqueuse, éventuellement partiellement ou totalement neutralisée, dans la masse de polymérisation.

8. Procédé suivant la revendication 4 ou la revendication 5, caractérisé en ce que l'on soumet le comonomère (e) dissous dans un acide carboxylique à insaturation monoéthylénique selon (a) ou dans une solution aqueuse de celui-ci, éventuellement partiellement ou totalement neutralisée, sous forme de cette solution, à la copolymérisation avec les autres comonomères.

9. Procédé selon au moins l'une des revendications 4 à 8, caractérisé en ce que l'on soumet des mélanges de monomères constitués
   a) d'acide acrylique et/ou d'acide méthacrylique et
   b) d'acide maléique et/ou d'acide itaconique, avec
   e) un comonomère constitué e1) d'anhydride maléique et e2) d'éthylèneglycol, de polyéthylèneglycol d'un poids moléculaire allant jusqu'à 2.000, de glycérine, de polyglycérines d'un poids moléculaire alalnt jusqu'à 2.000, de pentaérythrtie, de monosaccharides, de néopentylglycol, d'$\alpha,\omega$-diamines comportant de 2 à 6 atomes de carbone, d'$\alpha,\omega$-diols comportant de 3 à 6 atomes de carbone, d'hydroxypivalate de mononéopentylglycol,

   à la copolymérisation

10. Procédé selon au moins l'une des revendications 4 à 8, caractérisé en ce que l'on soumet des mélanges de monomères constitués de
   a) 99 à 15% molaires d'acide acrylique et/ou d'acide émthacrylique et
   b) 0,5 à 84,5% molaires d'acide maléique et/ou d'acide itaconique et
   c) 0 à 20% molaires d'acrylates d'hydroxypropyle, de méthacrylates d'hydroxypropyle, d'acrylate d'hydroxyéthyle, de méthacrylate d'hydroxyéthyle, d'acrylates d'hydroxybutyle, de méthacrylates d'hydroxybutyle, ou de leurs mélanges et
   e) 0,5 à 15% molaires d'un comonomère constitué e1) d'anhydride maléique et e2) d'éthylèneglycol, de polyéthylèneglycol d'un poids moléculaire allant jusqu'à 2.000, de glycérine, de polyglycérines d'un poids moléculaire allant jusqu'à 2.000, de pentaérythrite, de monosaccharides, de néopentylglycol, d'$\alpha,\omega$-diamines comportant de 2 à 6 atomes de carbone, d'$\alpha,\omega$-diols comportant de 3 à 6 atomes de carbone, d'hydroxypivalate de néopentylglycol, ou de leurs mélanges,

   à la copolymérisation.

11. Procédé selon au moins l'une des revendications 4 à 10, caractérisé en ce que le pH de la solution aqueuse varie de 2 à 9 au cours de la copolymérisation.

12. Procédé selon au moins l'une des revendications 4 à 9, caractérisé en ce que l'on soumet des mélanges de monomères constitué
   a) d'acide acrylique et/ou d'acide méthacrylique,
   b) d'acide maléique et
   e) d'un composé répondant à la formule

$$XOOC-CH=CH-CO-O-\left[CH_2-CH_2-O\right]_n-CO-CH=CH-COOX \quad (I),$$

   dans laquelle
   X représente un atome d'hydrogène, de métal alcalin ou le radical ammonium et
   n possède une valeur qui varie de 1 à 120,

   à la copolymérisation.

13. Procédé selon au moins l'une des revendications 4 à 9, caractérisé en ce que l'on soumet des mélanges de monomères constitués
   a) d'acide acrylique et/ou d'acide méthacrylique,
   b) d'acide maléique et

e) d'un composé répondant à la formule

$$XOOC\text{-}CH=CH\text{-}CO\text{-}NH\text{-}CH_2\text{-}(CH_2)_n\text{-}CH_2\text{-}NH\text{-}CO=CH\text{-}COOX \qquad (II)$$

dans laquelle

X représente un atome d'hydrogène, de métal alcalin ou le radical ammonium et

n a une valeur qui varie de 0 à 4,

à la copolymérisation.

**14.** Procédé suivant la revendication 12 ou 13, caractérisé en ce que l'on copolymérise les monomères a), b) et e) à chaque fois sous forme partiellement neutralisée avec des bases formées avec des métaux alcalins ou l'ammonium, où le degré de neutralisation fluctue de 40 à 90% molaires.

**15.** Utilisation des copolymères solubles dans l'eau selon la revendication 1 ou la revendication 2 à titre d'agents d'enrobage de graines ou semences.